(19) **Europäisches Patentamt**
**European Patent Office**
**Office européen des brevets**

(11) **EP 4 727 027 A1**

(12) **EUROPEAN PATENT APPLICATION**
published in accordance with Art. 153(4) EPC

(43) Date of publication:
**15.04.2026 Bulletin 2026/16**

(21) Application number: **23940176.3**

(22) Date of filing: **09.06.2023**

(51) International Patent Classification (IPC):
***H04B 7/0456*** (2017.01)

(52) Cooperative Patent Classification (CPC):
**H04B 7/0456**

(86) International application number:
**PCT/CN2023/099485**

(87) International publication number:
**WO 2024/250293 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **FENG, Jiaming**
**Hangzhou, Zhejiang 310058 (CN)**

• **SU, Zhonggen**
**Hangzhou, Zhejiang 310058 (CN)**
• **WANG, Jian**
**Shenzhen, Guangdong 518129 (CN)**
• **ZHANG, Gongzheng**
**Shenzhen, Guangdong 518129 (CN)**
• **LI, Rong**
**Shenzhen, Guangdong 518129 (CN)**

(74) Representative: **Maiwald GmbH**
**Elisenhof**
**Elisenstraße 3**
**80335 München (DE)**

(54) **PRECODING METHOD AND APPARATUS**

(57) A precoding method is provided, applied to a wireless communication system. The wireless communication system includes at least one transmit end device and at least one receive end device, the at least one transmit end device includes a plurality of transmit antennas, and the at least one receive end device includes a plurality of receive antennas. The method includes: obtaining channel information between the transmit antennas and the receive antennas; inputting the channel information into a GNN, where each piece of channel information serves as an initial feature of an edge corresponding to the channel information, and updating a feature of each edge by using a plurality of network layers in the GNN, to obtain an output feature of each edge, where the edge is an edge in a graph representation of the wireless communication system, the graph representation further includes transmit nodes representing the transmit antennas and receive nodes representing the receive antennas, where the transmit nodes and the receive nodes are connected by edges; determining a status of each receive node based on the feature of the edge connected to each receive node; and determining a precoding matrix based on output features of the plurality of edges and statuses of the plurality of receive nodes.

This effectively reduces precoding implementation complexity.

FIG. 8

## Description

### TECHNICAL FIELD

This application relates to the field of wireless communication technologies, and in particular, to a precoding method and apparatus.

### BACKGROUND

Wireless policy optimization is important issue in wireless communication. Precoding is used as an example. Applying precoding in a wireless communication system can effectively improve energy and spectral efficiency. Although existing literature has proposed iterative algorithms to resolve a non-convex precoding optimization problem, the numerical solutions obtained are sensitive to defects (for example, channel estimation errors) in actual systems. Another disadvantage of the conventional optimization methods is that computational complexity is high for large-scale problems. This limits application of the conventional optimization methods in networks with real-time requirements.

### SUMMARY

Embodiments of this application provide a precoding method and apparatus, applied to precoding of signals to be sent by a transmit end device in a wireless communication system. Such a precoding scheme has low implementation complexity, and can address the problem of selection of a target receive antenna at a receive end device in a multiple-input multiple-output (multiple-input multiple-output, MIMO) system.

According to a first aspect, this application provides a precoding method, applied to a wireless communication system. The wireless communication system includes at least one transmit end device and at least one receive end device. The at least one transmit end device includes a plurality of transmit antennas, and the at least one receive end device includes a plurality of receive antennas. In other words, the precoding method provided in this application is applied to a MIMO wireless communication system (briefly referred to as a MIMO system below). The precoding method provided in this application includes: obtaining a plurality of pieces of channel information between the plurality of transmit antennas and the plurality of receive antennas, where the channel information includes channel state information and/or channel noise information; inputting the plurality of pieces of channel information into a graph neural network, where each piece of channel information serves as an initial feature of a connection edge corresponding to the channel information, and updating the feature of each connection edge by using a plurality of network layers in the graph neural network (graph neural network, GNN), to obtain an output feature of each connection edge, where the connection edge is a connection edge in a graph representation of the wireless communication system, the graph representation includes a plurality of first-type nodes, a plurality of second-type nodes, and a plurality of connection edges configured to connect the first-type nodes to the second-type nodes, the plurality of first-type nodes represent the plurality of transmit antennas, the plurality of second-type nodes represent the plurality of receive antennas, and each connection edge represents a channel between one transmit antenna and one receive antenna; determining a status of each second-type node based on the feature of the connection edge connected to each second-type node; and determining a precoding matrix based on output features of the plurality of connection edges and statuses of the plurality of second-type nodes, where the precoding matrix is used to precode a signal to be sent by the transmit end device.

Based on the precoding method provided in this application, the graph representation of the wireless communication system is constructed based on receive antennas and transmit antennas, the precoding vector is obtained by using the features output by the GNN, and user selection is performed based on the statuses of the receive antenna nodes, to determine a target receive antenna. When implementation complexity of the precoding scheme is effectively reduced, the target receive antenna of the receive end device in the MIMO system is determined.

Optionally, the channel noise information includes noise variance information of the channel and/or signal-to-noise ratio information of the channel.

In a possible implementation, a specific implementation of performing the update operation on the feature of each connection edge by using each network layer in the plurality of network layers in the graph neural network is: performing the following operations on each connection edge: performing an aggregation operation on previous-layer features of first adjacent edges corresponding to the connection edge, to obtain a first aggregation result, where the first adjacent edge is a connection edge that shares the first-type node with the connection edge; performing an aggregation operation on previous-layer features of second adjacent edges corresponding to the connection edge, to obtain a second aggregation result, where the second adjacent edge is a connection edge that shares the second-type node with the connection edge; performing a combination operation on the first aggregation result, the second aggregation result, and a previous-layer feature of each connection edge, to obtain a first combination result; and updating the feature of each connection edge based on the first combination result.

The feature of the connection edge is updated by using the plurality of network layers in the GNN, to obtain, through learning, a precoding vector of a channel corresponding to each connection edge, thereby improving precoding performance.

In another possible implementation, the first aggregation result is further related to a first aggregation parameter, the second aggregation result is further related to a second aggregation parameter, and the first combination result is further related to a first combination parameter, where the first aggregation parameter, the second aggregation parameter, and the first combination parameter are parameters obtained through training of the GNN.

In another possible implementation, the target receive antenna is determined by using a feature output by a last layer of network in a plurality of layers of feature update networks in the GNN network. This may be referred to as a LastLayer scheme. For example, the graph neural network includes a multi-layer perceptron (multi-layer perceptron, MLP) subnetwork. The status of each second-type node is determined based on the output feature of the connection edge connected to each second-type node. In a specific implementation, the output feature of the connection edge connected to each second-type node is processed, to obtain a processing result; and the processing result is used as an input of the MLP subnetwork, and the status of each second-type node is output. For example, 0 or 1 is output. 1 indicates that a receive antenna represented by the second-type node is selected as the target receive antenna, and 0 indicates that the receive antenna represented by the second-type node is not selected.

A feature of the second-type node is determined by using the connection feature output by the last layer of update network in the plurality of layers of update networks of the GNN network, and the feature is input into the MLP subnetwork, to obtain an output of the second-type node. The output indicates whether a receive antenna represented by the node is selected. In this way, the target receive antenna is selected.

It is easily understood that the target receive antenna is a target receive antenna on a target receive device.

In another possible implementation, the processing result is further related to a processing parameter, and the processing parameter is a parameter obtained in a training process of the GNN.

For example, the transmit end device is a base station, and the receive end device is a user terminal device. A specific implementation of the LastLayer scheme is as follows: The graph representation is constructed by using a base station antenna and a user antenna. The base station antenna and the user antenna are separately nodes, and the connection edge is a connection line between the base station antenna and the user antenna. The channel information is input into the GNN, the channel information is used as the initial feature of the connection edge, and the channel information includes the channel state information and the noise variance information of the channel. For example, the input feature of the edge is $\left[\mathrm{Re}\left(\mathrm{h}_{ij}\right), \mathrm{Im}\left(\mathrm{h}_{ij}\right), \sigma_{ij}^2\right]$., where $\mathrm{h}_{ij}$ is channel state information between an ith base station antenna and a jth user antenna, and $\sigma_{ij}^2$ is a noise variance of the channel between the ith base station antenna and the jth user antenna. A node (which may also be referred to as a vertex) has no input feature.

A process of updating the feature of any connection edge, for example, a connection edge (k, n) is as follows: From the 1st layer to an $\mathrm{L}^{th}$ layer of the GNN, each layer undergoes two steps of operations: node aggregation and edge combination.

Node aggregation operation: The aggregation operation is performed on the previous-layer features of the first adjacent edges (that is, connection edges that share a node k with the connection edge (k, n)), to obtain $\mathbf{u}_k^{(\ell)}$, and the aggregation operation is performed on the previous-layer features of the second adjacent edges (that is, connection edges that share a node n with the connection edge (k, n)), to obtain $\mathbf{b}_n^{(\ell)}$. In a possible implementation of the node aggregation operation, an operation of an $\ell^{th}$ layer is shown in the following formulas:

$$\mathbf{u}_k^{(\ell)} \;=\; \mathrm{PL}_u \operatorname*{{}}_{i=1,i\neq n}^{N}\left(q_u\left(\mathbf{d}_{ik}^{(\ell-1)}, \mathbf{P}^{(\ell)}\right)\right),$$

$$\mathbf{b}_n^{(\ell)} \;=\; \mathrm{PL}_b \operatorname*{{}}_{j=1,j\neq k}^{K}\left(q_b\left(\mathbf{d}_{nj}^{(\ell-1)}, \mathbf{Q}^{(\ell)}\right)\right),$$

$\mathbf{d}_{ij}^{(\ell-1)}$ is a feature of an $(\ell - 1)^{th}$ layer of the connection edge (i, j), $\mathrm{PL}_u()$ and $\mathrm{PL}_b(\cdot)$ separately represent pooling functions, and $q_u(\cdot, \mathbf{P}^{(\ell)})$ and $q_b(\cdot, \mathbf{Q}^{(\ell)})$ are functions respectively including trainable parameters $\mathbf{P}^{(\ell)}$ and $\mathbf{Q}^{(\ell)}$.

Edge combination operation: A combination operation is performed on the previous-layer feature of the connection edge (k, n) and node aggregation results $\mathbf{u}_k^{(\ell)}$ and $\mathbf{b}_n^{(\ell)}$, to obtain a current-layer feature of the connection edge (k, n). In a possible implementation of the edge combination operation, an operation of the $\ell^{\text{th}}$ layer is shown in the following formula:

$$\mathbf{d}_{nk}^{(\ell)} = CB\Big(\mathbf{d}_{nk}^{(\ell-1)}, \mathbf{u}_{k}^{(\ell)}, \mathbf{b}_{n}^{(\ell)}, \mathbf{S}^{(\ell)}\Big)$$

CB($\cdot$) is a combination function that includes a trainable parameter $\mathbf{S}^{(\ell)}$.

After L-layer GNN processing (that is, node aggregation and edge combination), the output feature $\mathbf{d}_{nk}^{(L)}$ of the edge (k, n) is obtained, and a precoding scheme and a user selection scheme are further obtained.

The precoding vector (which may also be referred to as the precoding scheme) corresponding to the connection edge (k, n) is: $\mathbf{V}_{nk} = \mathbf{d}_{nk}^{(L)}$.

User selection scheme: $\mathbf{z}_{k} = q_{z}\Big(\mathbf{d}_{ik}^{(L)}, \mathbf{R}\Big)$ is obtained by aggregating output features of all edges connected to the user antenna node k, where $q_{z}(\cdot, \mathbf{R})$ is a function including a trainable parameter $\mathbf{R}$. $\mathbf{z}_{k}$ is input into the multi-layer perceptron (MLP). 0 or 1 is output. 1 indicates that the user antenna is selected, and 0 indicates that the user antenna is not selected.

It can be learned that, in the LastLayer scheme, only the feature $\mathbf{d}_{nk}^{(L)}$ of the last layer is used in the user selection scheme, and therefore the scheme is referred to as the LastLayer scheme.

In another possible implementation, the target receive antenna is determined by using connection edge features and second-type node features that are output by all layers of networks in a plurality of layers of feature update networks in the GNN network. This may be referred to as an AllLayer scheme. For example, an input of the graph neural network further includes an initial feature of each second-type node; and a specific implementation of updating the feature of each connection edge by using each network layer in the plurality of network layers is: performing an aggregation operation on previous-layer features of third adjacent edges corresponding to each connection edge, to obtain a third aggregation result, where the third adjacent edge is a connection edge that shares the first-type node with each connection edge; performing an aggregation operation on previous-layer features of fourth adjacent edges corresponding to each connection edge, to obtain a fourth aggregation result, where the fourth adjacent edge is a connection edge that shares the second-type node with each connection edge; performing a combination operation on the third aggregation result, the fourth aggregation result, and a previous-layer feature of each connection edge, to obtain a second combination result; and updating the feature of each connection edge based on the second combination result and a previous-layer feature of the related second-type node, where the related second-type node is the second-type node connected to each connection edge.

In another possible implementation, a specific implementation of determining the status of each second-type node based on the feature of the connection edge connected to each second-type node is: updating the feature of each second-type node based on the previous-layer feature of the connection edge connected to each second-type node and the previous-layer feature of each second-type node; and determining the status of each second-type node based on a last-layer feature of each second-type node.

In another possible implementation, the third aggregation result is further related to a third aggregation parameter, the fourth aggregation result is further related to a fourth aggregation parameter, the second combination result is further related to a second combination parameter, feature update of each connection edge is further related to a first update parameter, and feature update of the second-type node is further related to a second update parameter, where the third aggregation parameter, the fourth aggregation parameter, the second combination parameter, the first update parameter, and the second update parameter are parameters obtained through training of the GNN.

For example, the transmit end device is a base station, and the receive end device is a user terminal device. A specific implementation of the AllLayer scheme is as follows: The graph representation is constructed by using a base station antenna and a user antenna. The base station antenna and the user antenna are separately nodes, and the connection edge is a connection line between the base station antenna and the user antenna. The channel information and the initial input feature of the user node such as [1] are input into the GNN. For example, the feature of the connection edge is $\big[\text{Re}\big(h_{ij}\big), \text{Im}\big(h_{ij}\big), \sigma_{ij}^{2}\big]$, where $h_{ij}$ is channel state information between an $i^{\text{th}}$ base station antenna and a $j^{\text{th}}$ user antenna, and $\sigma_{ij}^{2}$ is a noise variance of the channel between the $i^{\text{th}}$ base station antenna and the $j^{\text{th}}$ user antenna. The input feature of the user antenna node is [1], and the base station antenna node has no input feature.

The following operation is performed on any connection edge. For example, a process of updating the feature of the connection edge (k, n) is as follows: From the 1$^{st}$ layer to an L$^{th}$ layer of the GNN, each layer undergoes the following operations.

Node aggregation operation: The aggregation operation is performed on the previous-layer features of the third adjacent edges (that is, connection edges that share a node k with the connection edge (k, n)), to obtain $\mathbf{u}_k^{(\ell)}$ , and the aggregation operation is performed on the previous-layer features of the fourth adjacent edges (that is, connection edges that share a node n with the connection edge (k, n)), to obtain $\mathbf{b}_n^{(\ell)}$ . In a possible implementation of the node aggregation operation, an operation of an $\ell^{th}$ layer is shown in the following formulas:

$$\mathbf{u}_k^{(\ell)} \;=\; \mathrm{PL}_u \; \mathop{\mathrm{N}}_{i=1,i\neq n} \left( q_u\left( \mathbf{d}_{ik}^{(\ell-1)}, \mathbf{P}^{(\ell)} \right) \right),$$

$$\mathbf{b}_n^{(\ell)} \;=\; \mathrm{PL}_b \; \mathop{\mathrm{K}}_{j=1,j\neq k} \left( q_b\left( \mathbf{d}_{nj}^{(\ell-1)}, \mathbf{Q}^{(\ell)} \right) \right),$$

$\mathbf{d}_{ij}^{(\ell-1)}$ is a feature of an $(\ell - 1)^{th}$ layer of the edge (i, j), $\mathrm{PL}_u(\cdot)$ and $\mathrm{PL}_b(\cdot)$ represent pooling functions, and $q_u(\cdot, \mathbf{P}^{(\ell)})$ and $q_b(\cdot, \mathbf{Q}^{(\ell)})$ are functions respectively including trainable parameters $\mathbf{P}^{(\ell)}$ and $\mathbf{Q}^{(\ell)}$.

Edge combination operation: An edge combination operation is performed on the previous-layer feature of the connection edge (k, n) and node aggregation results $\mathbf{u}_k^{(\ell)}$ and $\mathbf{b}_n^{(\ell)}$ . In a possible implementation of the edge combination operation, an operation of the $\ell^{th}$ layer is shown in the following formula:

$$\mathbf{e}_{nk}^{(\ell)} = \mathrm{CB}\left( \mathbf{d}_{nk}^{(\ell-1)}, \mathbf{u}_k^{(\ell)}, \mathbf{b}_n^{(\ell)}, \mathbf{S}^{(\ell)} \right)$$

$\mathrm{CB}(\cdot)$ is a combination function that includes a trainable parameter $\mathbf{S}^{(\ell)}$.

A current-layer feature $\mathrm{d}_{nk}^{(\ell)}$ is obtained through processing based on an output $\mathbf{e}_{nk}^{(\ell)}$ of the edge combination operation and the previous-layer feature $\mathbf{z}_k^{(\ell-1)}$ of the user antenna node. A possible implementation is shown in the following formula:

$$\mathbf{d}_{nk}^{(l)} = \mathbf{f}_l\left( \mathbf{e}_{nk}^{(l)}, \mathbf{z}_k^{(l-1)}, \mathbf{M}^{(l)} \right)$$

$\mathbf{f}_l(\cdot, \mathbf{M}^{(l)})$ is a function that includes a trainable parameter $\mathbf{M}^{(l)}$.

A manner of updating the user antenna node is that the feature of the user antenna at each layer is obtained by processing previous-layer features of all edges connected to the user antenna and a previous-layer feature of the node. A possible implementation is shown in the following formula:

$$\mathbf{z}_k^{(l)} = \mathbf{g}_l\left( \mathbf{z}_k^{(l-1)}, \sum_{i=1}^{N} \mathbf{d}_{ik}^{(l-1)}, \mathbf{T}^{(l)} \right)$$

$\mathbf{g}_l(\cdot, \mathbf{T}^{(l)})$ is a function that includes a trainable parameter $\mathbf{T}^{(l)}$.

After L-layer GNN processing (that is, node aggregation and edge combination), the output feature $\mathrm{d}_{nk}^{(L)}$ of the connection edge (k, n) and the output feature $\mathrm{z}_k^{(L)}$ of the user antenna node are obtained, and a precoding scheme and a user selection scheme are further obtained.

Precoding scheme: $\mathbf{V}_{nk} = \mathbf{d}_{nk}^{(L)}$.

User selection scheme: $\mathbf{z}_k^{(L)} \in \{0,1\}$, where 1 indicates that the user antenna is selected, and 0 indicates that the user antenna is not selected.

It can be learned that, in the AllLayer scheme, the connection edge feature output by the last layer in the GNN is used in the precoding scheme, and the connection edge features and the user antenna node features of all layers except the last layer in the GNN are used in the user selection scheme. Therefore, the scheme is referred to as the AllLayer scheme.

In another possible implementation, a specific implementation of determining the precoding matrix based on the features of the plurality of connection edges and the statuses of the plurality of second-type nodes is: the status of the second-type node including a first status or a second status, the first status indicates that the second-type node is a target second-type node, and the second status indicates that the second-type node is a non-target second-type node; determining an output feature of a target connection edge as a target precoding vector, where the target connection edge is a connection edge connected to the target second-type node; and determining the precoding matrix based on the target precoding vector. For example, if it is determined, based on second-type node statuses output by the GNN network, that target second-type nodes are UE 11 and UE 21, target connection edges are connection edges connected to the target second-type nodes. For example, if the target connection nodes are (AN 1, UE 11), (AN 2, UE 11), (AN 3, UE 11), (AN 4, UE 11), (AN 5, UE 11), (AN 6, UE 11), (AN 1, UE 21), (AN 2, UE 21), (AN 3, UE 21), (AN 4, UE 21), (AN 5, UE 21) and (AN 6, UE 21), the precoding matrix is a precoding matrix including precoding vectors corresponding to the target connection edges (AN 1, UE 11), (AN 2, UE 11), (AN 3, UE 11), (AN 4, UE 11), (AN 5, UE 11), (AN 6, UE 11), (AN 1, UE 21), (AN 2, UE 21), (AN 3, UE 21), (AN 4, UE 21), (AN 5, UE 21) and (AN 6, UE 21).

The UE 11 represents an antenna 1 on a user terminal 1, and the UE 21 represents an antenna 1 on a user terminal 2.

In another possible implementation, the precoding method provided in this application further includes: obtaining a signal-to-noise ratio (signal-to noise-ratio, SNR) and a quantity of antennas of the wireless communication system, where the quantity of antennas is determined based on a quantity of the plurality of transmit antennas and a quantity of the plurality of receive antennas; and loading correspondinvg parameters of the graph neural network based on the SNR and the quantity of antennas. In other words, a plurality of sets of GNNs are trained for different SNR ranges and different quantities of antennas when a GNN structure is given. Different GNN parameters are loaded based on an SNR and a quantity of antennas in a wireless communication scenario in actual application, to perform precoding matrix inference, so that good generalization is achieved in different wireless communication scenarios.

The parameters of the graph neural network may be understood as the first aggregation parameter, the second aggregation parameter, the first combination parameter, and the processing parameter that are obtained through training in the graph neural network mentioned above, or may be understood as the third aggregation parameter, the fourth aggregation parameter, the second combination parameter, the first update parameter, and the second update parameter. Precoding inference may be performed for wireless communication system scenarios with different SNRs and different quantities of antennas based on different parameters of the graph neural network.

It should be noted that the precoding method provided in this application may be applied to any MIMO wireless communication system, to improve precoding performance of the communication system, and further improve a transmission rate of the wireless communication system and reliability of a communication link through precoding. For example, the precoding method provided in this application may be applied to a D2D transmission scenario in a cellular network. In this case, the transmit end device is a base station, and the receive end device is a user terminal. For another example, the precoding method provided in this application may be further applied to a wireless smart home or smart factory scenario. In this case, the transmit end device is an intelligent device that sends a signal, and the receive end device is an intelligent device that receives a signal.

According to a second aspect, this application further provides a precoding apparatus, used in a wireless communication system, where the wireless communication system includes at least one transmit end device and at least one receive end device, the at least one transmit end device includes a plurality of transmit antennas, the at least one receive end device includes a plurality of receive antennas. The precoding apparatus provided in this application includes a first obtaining module, a feature update module, a first determining module, and a second determining module. The first obtaining module is configured to obtain a plurality of pieces of channel information between the plurality of transmit antennas and the plurality of receive antennas, where the channel information includes channel state information and/or channel noise information. The feature update module is configured to: input the plurality of pieces of channel information into a graph neural network, where each piece of channel information serves as an initial feature of a connection edge corresponding to the channel information, and perform feature update on the feature of each connection edge by using a plurality of network layers in the graph neural network, to obtain an output feature of each connection edge, where the connection edge is a connection edge in a graph representation of the wireless communication system, the graph representation includes a plurality of first-type nodes, a plurality of second-type nodes, and the connection edges for connecting the first-type nodes to the second-type nodes, the plurality of first-type nodes represent the plurality of transmit antennas, the plurality of second-type nodes represent the plurality of receive antennas, and each connection edge represents a channel between one transmit antenna and one receive antenna. The first determining module is configured to determine a status of each second-type node based on the feature of the connection edge connected to each second-type node. The second determining module is configured to determine a precoding matrix based on output features of the plurality of connection edges and statuses of the plurality of second-type nodes, where the precoding matrix is used to precode a signal to be sent by the transmit end device.

In a possible implementation, the feature update module is specifically configured to: perform an aggregation operation on previous-layer features of first adjacent edges corresponding to each connection edge, to obtain a first aggregation result, where the first adjacent edge is a connection edge that shares the first-type node with each connection edge; perform an aggregation operation on previous-layer features of second adjacent edges corresponding to each connection edge, to obtain a second aggregation result, where the second adjacent edge is a connection edge that shares the second-type node with each connection edge; perform a combination operation on the first aggregation result, the second aggregation result, and a previous-layer feature of each connection edge, to obtain a first combination result; and update the feature of each connection edge based on the first combination result.

In another possible implementation, the first aggregation result is further related to a first aggregation parameter, the second aggregation result is further related to a second aggregation parameter, and the first combination result is further related to a first combination parameter, where the first aggregation parameter, the second aggregation parameter, and the first combination parameter are parameters obtained through training of the graph neural network.

In another possible implementation, the graph neural network includes a multi-layer perceptron subnetwork; and the first determining module is specifically configured to: process the output feature of the connection edge connected to each second-type node, to obtain a processing result; and use the processing result as an input of the multi-layer perceptron subnetwork, and output the status of each second-type node.

In another possible implementation, the processing result is further related to a processing parameter, and the processing parameter is a parameter obtained through training of the graph neural network.

In another possible implementation, an input of the graph neural network further includes an initial feature of each second-type node; and the feature update module is specifically configured to: perform an aggregation operation on previous-layer features of third adjacent edges corresponding to each connection edge, to obtain a third aggregation result, where the third adjacent edge is a connection edge that shares the first-type node with each connection edge; perform an aggregation operation on previous-layer features of fourth adjacent edges corresponding to each connection edge, to obtain a fourth aggregation result, where the fourth adjacent edge is a connection edge that shares the second-type node with each connection edge; perform a combination operation on the third aggregation result, the fourth aggregation result, and a previous-layer feature of each connection edge, to obtain a second combination result; and update the feature of each connection edge based on the second combination result and a previous-layer feature of the related second-type node, where the related second-type node is the second-type node connected to each connection edge.

In another possible implementation, the first determining module is specifically configured to: update the feature of each second-type node based on the previous-layer feature of the connection edge connected to each second-type node and the previous-layer feature of each second-type node; and determine the status of each second-type node based on a last-layer feature of each second-type node.

In another possible implementation, the third aggregation result is further related to a third aggregation parameter, the fourth aggregation result is further related to a fourth aggregation parameter, the second combination result is further related to a second combination parameter, feature update of each connection edge is further related to a first update parameter, and feature update of the second-type node is further related to a second update parameter, where the third aggregation parameter, the fourth aggregation parameter, the second combination parameter, the first update parameter, and the second update parameter are parameters obtained through training of the graph neural network.

In another possible implementation, the status of the second-type node includes a first status or a second status, the first status indicates that the second-type node is a target second-type node, and the second status indicates that the second-type node is a non-target second-type node; and the second determining module is specifically configured to: determine an output feature of a target connection edge as a target precoding vector, where the target connection edge is a connection edge connected to the target second-type node; and determine the precoding matrix based on the target precoding vector.

In another possible implementation, the precoding apparatus provided in this application further includes a second obtaining module and a loading module. The second obtaining module is configured to obtain a signal-to-noise ratio and a quantity of antennas of the wireless communication system, where the quantity of antennas is determined based on a quantity of the plurality of transmit antennas and a quantity of the plurality of receive antennas. The loading module is configured to load corresponding parameters of the graph neural network based on the signal-to-noise ratio and the quantity of antennas.

Optionally, the transmit end device includes a base station, and the receive end device includes a user terminal.

According to a third aspect, this application provides a communication apparatus. The communication apparatus includes a processor. The processor is configured to execute a computer program or computer instructions in a memory, so that the processor implements the method according to the first aspect.

Optionally, the communication apparatus further includes a transceiver, and the processor is configured to control the transceiver to receive and send signals.

According to a fourth aspect, this application provides a communication apparatus. The communication apparatus includes a processor, and the processor is configured to perform the method according to the first aspect.

According to a fifth aspect, this application provides a computer storage medium, including computer instructions. When the computer instructions are executed by a processor, the method according to the first aspect is implemented.

According to a sixth aspect, this application provides a computer program or a computer program product, where the computer program or the computer program product includes instructions. When the instructions are executed, a computer is enabled to perform the method according to the first aspect.

According to a seventh aspect, this application provides a chip apparatus, including a processor. The processor is configured to execute a computer program or computer instructions in a memory, so that the processor performs the method according to the first aspect.

Optionally, the processor is coupled to the memory through an interface.

According to an eighth aspect, this application provides a wireless communication system. The wireless communication system includes a transmit end device and at least one receive end device. The transmit end device is configured to: perform the method according to the first aspect, to precode a to-be-sent signal, and send precoded data to the receive end device.

According to a ninth aspect, this application provides a wireless communication system. The wireless communication system includes a precoding device, at least one transmit end device, and at least one receive end device. The precoding device is configured to: perform the method according to the first aspect, determine a precoding matrix of the at least one transmit end device, and send the precoding matrix to the at least one transmit end device, and the at least one transmit end device performs precoding processing on a to-be-sent signal based on the precoding matrix, to obtain precoded data, and sends the precoded data to the at least one receive end device.

In this application, based on the implementations according to the foregoing aspects, the implementations may be further combined to provide more implementations.

**BRIEF DESCRIPTION OF DRAWINGS**

FIG. 1 is a diagram of a structure of a fully connected neural network;
FIG. 2 is a diagram of loss function optimization;
FIG. 3 is a diagram of gradient back propagation;
FIG. 4 is a diagram of an application scenario of a precoding method according to an embodiment of this application;
FIG. 5 is a diagram of another application scenario of a precoding method according to an embodiment of this application;
FIG. 6 is a diagram of implementation of user selection and precoding for a MIMO system based on a GNN;
FIG. 7 is a flowchart of implementation of a precoding method according to an embodiment of this application;
FIG. 8 is a schematic flowchart of a precoding method according to an embodiment of this application;
FIG. 9 is a schematic flowchart of another precoding method according to an embodiment of this application;
FIG. 10 is a schematic flowchart of another precoding method according to an embodiment of this application;
FIG. 11 is a diagram of a structure of a precoding apparatus according to an embodiment of this application;
FIG. 12 is a diagram of another structure of a precoding apparatus according to an embodiment of this application; and
FIG. 13 is a diagram of a structure of a communication apparatus according to an embodiment of this application.

**DESCRIPTION OF EMBODIMENTS**

The technical solutions of this application are further described in detail below with reference to the accompanying drawings and embodiments.

Machine learning is an important research direction in the field of artificial intelligence, and research on neural networks is a hot topic in recent years. The following uses a fully connected neural network as an example to briefly describe a neural network training process that may be used in embodiments of this application.

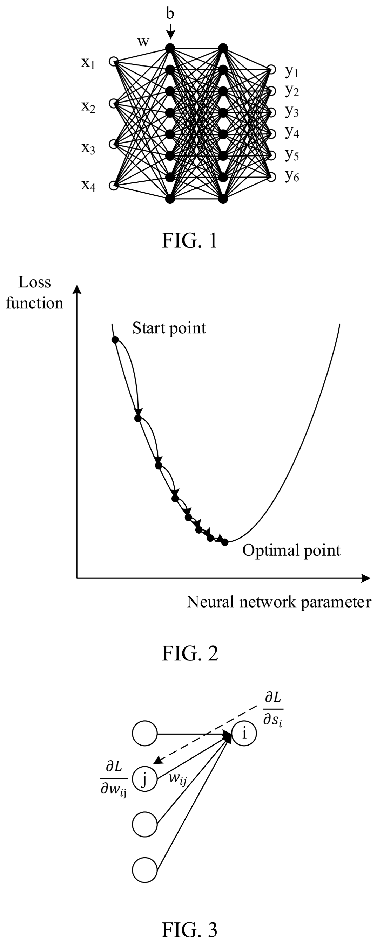

The fully connected neural network (fully connected neural network, FNN) is also referred to as an MLP network. As shown in FIG. 1, MLP includes one input layer (left), one output layer (right), and a plurality of hidden layers (middle). Each layer includes a plurality of nodes, which are referred to as neurons. Neurons of two adjacent layers are connected to each other.

Considering two adjacent layers of neurons: an output h of a neuron in the next layer is an activation function applied to a weighted sum of all connected neurons x from the previous layer. In matrix form, this may be expressed as:

$$h = f(wx + b)$$

w is a weight matrix, b is a bias vector, and f is the activation function. In this case, an output of the neural network may be recursively expressed as:

$$y = f_n(w_n f_{n-1}(...) + b_n)$$

Briefly, the neural network may be understood as a mapping relationship from an input data set to an output data set. The neural network is usually initialized randomly, and a process of obtaining the mapping relationship from random w and b by using existing data is referred to as training of the neural network.

A specific training manner is to evaluate an output result of the neural network by using a loss function (loss function), and perform back propagation on errors. In this way, w and b can be iteratively optimized by using a gradient descent method, until the loss function reaches a minimum value (refer to FIG. 2).

A gradient descent process may be represented as: $\theta \leftarrow \theta - \eta \frac{\partial L}{\partial \theta}$, where $\theta$ is a to-be-optimized parameter (for example, w and b), L is the loss function, and $\eta$ is a learning rate, and controls a gradient descent step.

A chain rule for a partial derivative is used in a back propagation process. To be specific, a gradient of a parameter of a previous layer may be recursively calculated based on a gradient of a parameter of a next layer (refer to FIG. 3). A formula may be expressed as $\frac{\partial L}{\partial w_{ij}} = \frac{\partial L}{\partial s_i} \frac{\partial s_i}{\partial w_{ij}}$, where $w_{ij}$ is a weight of a connection between a node j and a node i, and $s_i$ is an input weighted sum on the node i.

A deep neural network (deep neural network, DNN) is used to learn wireless policy optimization. A wireless policy includes, for example, power control, link scheduling, and precoding. A deep learning method can jointly optimize a plurality of policies, and learned policies are robust to a channel estimation error and have low computational complexity. However, time, a quantity of samples, and a quantity of required training parameters that are required for training the DNN are high. For a conventional fully connected neural network, training performance may still be poor even if sufficiently high training complexity is given. Even if the DNN can achieve good performance on a training set, it cannot be ensured that the DNN has a generalization capability for various parameters. Because a wireless environment dynamically changes with time, it is important to improve training efficiency by improving the generalization capability of the DNN or reducing training complexity of the DNN. When training complexity is reduced, the DNN can be retrained by using a newly collected sample when a parameter that cannot be well generalized changes significantly.

One way to improve learning efficiency is to incorporate prior knowledge when a DNN structure is designed. This can reduce hypothesis space for searching for a target parameter by the DNN. For example, by using permutation equivariance that exists in many wireless tasks, a permutation-equivariant neural network or a graph neural network may be designed to learn a power allocation or precoding policy. Although training complexity of the DNN can be significantly reduced compared with that of an unstructured FNN, even for a medium-scale problem, the DNN still needs a large quantity of samples to learn a policy, where the policy includes complex and nonlinear operations, for example, matrix inversion. Learning performance of the GNN also decreases as the quantity of samples increases. This also indicates that the GNN cannot be generalized to different problem scales. To improve learning efficiency by simplifying mapping that needs to be learned by the DNN, a mathematical model may be incorporated into a DNN structure, where the mathematical model may be an iterative algorithm or a mathematical expression. For example, in a deep unfolding method, the DNN is used to emulate an update process of the iterative algorithm, where only some operations or parameters of the algorithm need to be learned.

Generally, a system model of a single-cell multi-user precoding problem is as follows: One base station having N antennas is considered, and the base station serves K single-antenna users in a coverage area of the base station. A channel between an $n^{th}$ base station antenna and a $k^{th}$ user is denoted as $h_{nk}$, channels from all base station antennas to the user k are $h_k = [h_{1k}, h_{2k}, ..., h_{Nk}]$, and channels from all the base station antennas to all the users are $H = [h_1, h_2, ..., h_K]$. A problem of solving for a precoding matrix **V** may be modeled as:

$$\mathbf{P1}: \; \max_{\mathbf{v}} \sum_{k=1}^{K} R_k(\mathbf{H}, \mathbf{V})$$

$$\text{s.t.} \;\; \text{Tr}(\mathbf{V}^H \mathbf{V}) \le P_{max}$$

$$R_k(\mathbf{H}, \mathbf{V}) = \log_2 \left( 1 + \frac{|\mathbf{h}_k^H \mathbf{v}_k|^2}{\sum_{j=1, j \neq k}^{K} |\mathbf{h}_k^H \mathbf{v}_j|^2 + \sigma_0^2} \right)$$

is a throughput of the $k^{th}$ user, $\mathbf{v}_k = [v_{1k}, v_{2k}, ..., v_{Nk}]$ is a precoding vector used when the base station sends data to the user k, all precoding vectors are combined to form the precoding matrix $V = [v_1, v_2, ..., V_K]$, $P_{max}$ is a maximum transmit power of the base station, $(\cdot)^H$ represents a conjugate transpose operation, $\text{Tr}(\cdot)$ represents a trace operation, and $\sigma_0^2$ is a noise power.

The precoding problem P1 is a joint precoding and power control problem. The problem is an NP (non-deterministic polynomial)-hard problem and an analytic solution cannot be obtained. However, an optimal solution of the precoding problem P1 meets the following formula:

$$\mathbf{V}^\star = \left( \mathbf{I}_N + \frac{1}{\sigma^2} \mathbf{H\Lambda H}^H \right)^{-1} \mathbf{HT}^{\frac{1}{2}} = (\sigma^2 \mathbf{I}_K + \mathbf{\Lambda H}^H \mathbf{H})^{-1} \tilde{\mathbf{T}}^{\frac{1}{2}}$$

One precoding scheme is as follows:

When an SNR is very low, $\sigma^2 \to \infty$, $\mathbf{V}^\star_{\sigma^2 \to \infty} = \mathbf{HT}^{\frac{1}{2}}_{\sigma^2 \to \infty}$. This is a maximum ratio transmission (maximum ratio transmission, MRT) precoding policy with power allocation.

When the SNR is very high, $\sigma^2 \to 0$,

$\mathbf{V}^\star_{\sigma^2 \to 0} = \mathbf{H}(\mathbf{\Lambda H}^H \mathbf{H})^{-1}$ $\tilde{\mathbf{T}}^{\frac{1}{2}}_{\sigma^2 \to 0} = \mathbf{H}(\mathbf{H}^H \mathbf{H})^{-1} \mathbf{\Lambda}^{-1} \tilde{\mathbf{T}}^{\frac{1}{2}}_{\sigma^2 \to 0}$. This is a zero forcing (zero forcing, ZF) precoding policy with power allocation.

When interference and noise are comprehensively considered,

$\lambda_1 = \cdots = \lambda_K = \frac{p}{K}$, $\mathbf{V}^\star = \mathbf{H} \left( \mathbf{I}_K + \frac{p}{K\sigma^2} \mathbf{H}^H \mathbf{H} \right)^{-1} \mathbf{T}^{\frac{1}{2}}$ may be set. This is a minimum mean square error (minimize mean square error, MMSE) precoding policy with power allocation.

The precoding scheme is applicable only to a scenario in which a quantity of antennas on a user side and a quantity of streams are the same. In this case, user selection (that is, determining a target receive antenna) does not need to be performed. For a common multi-user multiple-input multiple-output (multi-user multiple-input multiple-output, MU-MIMO) system, when a quantity of spatial streams used by a user is less than a quantity of antennas of the user, user selection needs to be performed, to determine a quantity of spatial streams used by each user, and a precoding matrix is obtained based on a user selection result. In this case, the scheme is invalid.

In another scheme, singular value decomposition (singular value decomposition, SVD) is performed on a channel matrix $\mathbf{H}_k^H$ of each user. To be specific, when k = 1,2, ..., K,

$$\mathbf{H}_k^H = \mathbf{U}_k \mathbf{\Sigma}_k \mathbf{W}_k^H = \mathbf{U}_k \begin{bmatrix} \sqrt{\lambda_{k,1}} & 0 & \cdots & 0 & \cdots & 0 \\ 0 & \sqrt{\lambda_{k,2}} & \cdots & 0 & \cdots & 0 \\ \vdots & \vdots & \vdots & 0 & \cdots & 0 \\ 0 & 0 & \cdots & \sqrt{\lambda_{k,N_k}} & \cdots & 0 \end{bmatrix} \begin{bmatrix} \mathbf{w}_{k,1}^H \\ \mathbf{w}_{k,2}^H \\ \vdots \\ \mathbf{w}_{k,N}^H \end{bmatrix}$$

After eigenvalues and eigenvectors of the channel matrix are obtained, user selection is performed by using a user selection algorithm (for example, a semi-orthogonal user selection algorithm), a quantity of streams used by each user is determined, and the following equivalent channels are determined based on a user selection result:

$$\mathbf{C} = \left[ \sqrt{\lambda_{1,1}}\mathbf{w}_{1,1}^{H}, ..., \sqrt{\lambda_{1,L_1}}\mathbf{w}_{1,L_1}^{H}, \sqrt{\lambda_{2,1}}\mathbf{w}_{2,1}^{H}, ..., \sqrt{\lambda_{2,L_2}}\mathbf{w}_{2,L_2}^{H}, ..., \sqrt{\lambda_{K,1}}\mathbf{w}_{K,1}^{H}, ..., \sqrt{\lambda_{K,L_K}}\mathbf{w}_{K,L_K}^{H} \right]^{T}$$

$$\in \mathbb{C}^{r \times N}$$

r is a total quantity of spatial streams, and $L_k$ is a quantity of spatial streams used by the user k. A zero forcing precoding matrix is calculated for the equivalent channels, that is:

$$\mathbf{V}_{EZF} = \mathbf{C}^{+} = \mathbf{C}^{H}(\mathbf{C}\mathbf{C}^{H})^{-1} \in \mathbb{C}^{N \times r}$$

Although a problem of user selection is resolved in this scheme, operations with high complexity such as SVD solution and matrix inversion need to be performed in a calculation process. For a massive MIMO system, this scheme has poor performance in aspects such as power consumption and a latency.

For the foregoing problem, an embodiment of this application provides a precoding method for a MIMO wireless communication system. A graph representation is constructed for receive antennas and transmit antennas, channel information between the receive antennas and the transmit antennas is used as an input of a GNN, a precoding matrix is obtained by using edge features in the GNN, and a user selection scheme is obtained by using node features of nodes representing the receive antennas. On the basis of determining a target receive antenna, complexity of determining the precoding matrix is effectively reduced, so that a latency and power consumption of the wireless communication system are reduced.

The following describes, in detail by using the accompanying drawings, a specific implementation of the precoding method provided in embodiments of this application.

The precoding method provided in embodiments of this application may be applied to any wireless communication system in which user selection and precoding need to be performed, for example, 5G, satellite communication, short range, and other wireless communication systems, or may be applied to a wireless communication system such as a wireless smart home or a smart factory. This effectively reduces complexity of a precoding scheme, and further reduces a latency and power consumption of the wireless communication system.

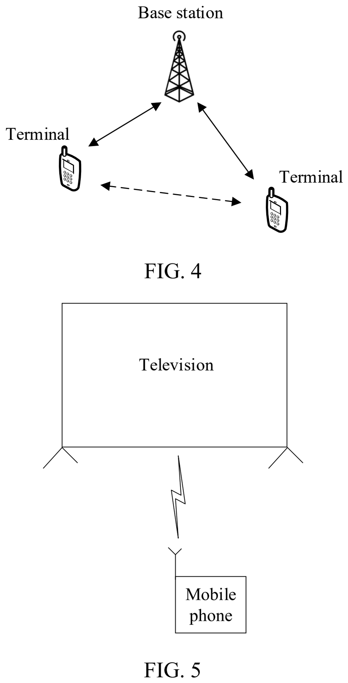

FIG. 4 is a diagram of an application scenario of a precoding method according to an embodiment of this application. As shown in FIG. 4, the precoding method provided in this embodiment of this application may be applied to a cellular network wireless communication system. The wireless communication system may include a plurality of cells. As shown in FIG. 4, each cell may include one base station (base station, BS), and the base station provides a communication service for a plurality of terminals, for example, a plurality of mobile stations (mobile station, MS). The wireless communication system may alternatively perform point-to-point communication. For example, the plurality of terminals communicate with each other.

It should be noted that, the wireless communication system mentioned in this embodiment of this application includes but is not limited to: a narrow band-Internet of Things (narrow band-Internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access 2000, CDMA 2000) system, a time division-synchronization code division multiple access (time division-synchronization code division multiple access, TD-SCDMA) system, a long term evolution (long term evolution, LTE) system, and three major application scenarios eMBB, URLLC, and eMTC of a next-generation 5G mobile communication system.

FIG. 5 is a diagram of another application scenario of a precoding method according to an embodiment of this application. As shown in FIG. 5, this embodiment of this application may be applied to, for example, a wireless smart home scenario including a mobile phone and a smart television, to implement a function such as wireless projection display from the mobile phone to the smart television. In other words, another typical application scenario of the precoding method provided in embodiments of this application is a wireless smart home scenario, a smart factory scenario, or the like. In the wireless smart home scenario, different smart home products (such as a speaker, a television, a refrigerator, a kitchen appliance, and a robot vacuum) are connected through a wireless network. In the smart factory scenario, different devices (such as a smart robot, a lathe, and a transportation vehicle) are connected through a wireless network.

A to-be-sent signal in a wireless communication system is precoded, to improve transmission efficiency of the communication system and reliability of a communication link. Further, the to-be-sent signal in the wireless communication system is precoded by using the precoding method provided in this embodiment of this application, to effectively reduce complexity of a precoding scheme, so that a latency and power consumption of the wireless communication system are reduced.

It should be explained and noted that FIG. 4 and FIG. 5 show only one application scenario to which the precoding method provided in embodiments of this application may be applied, and do not constitute a limitation on this application.

For example, the wireless communication system may further include a plurality of base stations and a plurality of user terminals, the plurality of base stations have a plurality of base station antennas (each base station may have one base station antenna or may have a plurality of base station antennas), and the plurality of user terminals have a plurality of user antennas (each user terminal may have one user antenna or may have a plurality of user antennas).

A terminal device is also referred to as user equipment (user equipment, UE), a mobile station (mobile station, MS), a mobile terminal (mobile terminal, MT), customer premises equipment (customer premises equipment, CPE), or the like. The terminal device is a device that includes a wireless communication function (providing voice/data connectivity for a user), for example, a handheld device having a wireless connection function, an in-vehicle device, or a machine type communication (machine type communication, MTC) terminal. Currently, the terminal device may include: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self driving may be an unmanned aerial vehicle, a helicopter, or an airplane. For example, a wireless terminal in the Internet of vehicles may be an in-vehicle device, an entire vehicle device, an in-vehicle module, a vehicle, or a ship. The wireless terminal in industrial control may be a camera, a robot, a robotic arm, or the like. The wireless terminal in the smart home may be a television, an air conditioner, a robot vacuum, a speaker, a set-top box, or the like.

The following describes, by using the scenario shown in FIG. 4 as an example, a specific implementation of the precoding method provided in embodiments of this application. In the application scenario shown in FIG. 4, a transmit end device is a base station, a plurality of transmit antennas are a plurality of base station antennas, a receive end device is a user terminal, and a plurality of receive antennas are a plurality of user terminal antennas (which may be briefly referred to as user antennas).

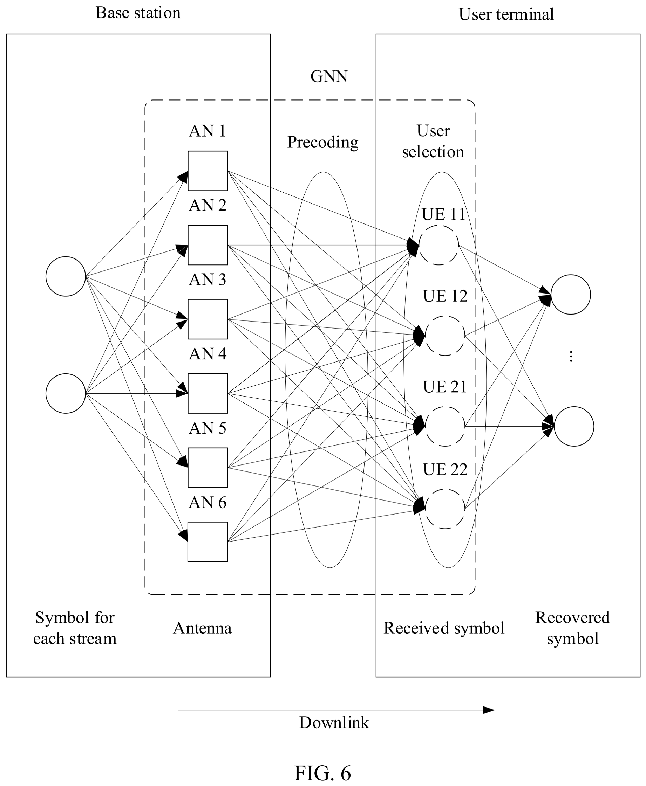

FIG. 6 is a diagram of implementation of user selection and precoding for a MIMO system based on a GNN. As shown in FIG. 6, for a symbol to be sent on each spatial stream (symbol for each stream) of a base station, optionally, the symbol to be sent on each spatial stream may be a complex symbol obtained after modulation. The symbol to be sent on each spatial stream is precoded (precoder) by using the GNN and target user antennas (for example, UE 1 and UE 3) selected by a user (user selection) are determined, and precoded data is sent to the target user antennas by using a plurality of base station antennas (antenna, AN), for example, an AN 1, an AN 2, an AN 3, an AN 4, an AN 5 and an AN 6 in FIG. 6. A user terminal receives the precoded data by using the target antennas, that is, a received symbol (received symbol), which may be understood as a symbol obtained after the to-be-sent symbol is precoded and channelized. Then, the user terminal obtains a recovered symbol (recovered symbol) through decoding, and the recovered symbol may be understood as a symbol obtained after MIMO detection is performed on the received symbol.

First, a precoding problem is modeled, and a graph representation is constructed based on receive antennas and transmit antennas. As shown in FIG. 6, the transmit antennas include base station antennas AN 1, AN 2, AN 3, AN 4, AN 5, and AN 6, and the receive antennas include user antennas UE 11, UE 12, UE 21, and UE 22. The graph representation includes base station antenna nodes representing the base station antennas, user antenna nodes representing the user antennas, and connection edges connecting the base station antenna nodes to the user antenna nodes.

Then, channel information between the base station antennas and the user antennas is obtained, where the channel information may include channel state information (channel state information, CSI) and/or channel noise information. In other words, the channel information may be the CSI, or may be the channel noise information, or may be the CSI and the channel noise information. The channel information is used as an input of the GNN, and output features of the connection edges and status information of the user nodes are output. Optionally, the channel noise information may include noise variance information of the channel and/or signal-to-noise ratio information of the channel.

The output feature of the connection edge is used as a precoding vector between the base station antenna and the user antenna that correspond to the connection edge, the status information of the user antenna node indicates whether the user antenna node is selected by a user as the target user antenna, and precoding vectors of the connection edges corresponding to the target user antennas form a precoding matrix.

Finally, precoding processing may be performed, based on the precoding matrix, on a signal to be sent by the base station, so that transmission efficiency of a communication system and reliability of a communication link are improved.

The GNN may process the channel information in a plurality of implementations to obtain the output features of the connection edges and the status information of the user nodes, that is, implement precoding and user selection.

For example, an implementation is a LastLayer implementation scheme. A specific implementation of the LastLayer scheme is as follows: The graph representation is constructed by using a base station antenna and a user antenna. The base station antenna and the user antenna are separately nodes, and the connection edge is a connection line between the base station antenna and the user antenna. The channel information is input into the GNN, the channel information is used as the initial feature of the connection edge, and the channel information includes the channel state information and the noise variance information of the channel. For example, the input feature of the edge is $\left[\mathrm{Re}(h_{ij}), \mathrm{Im}(h_{ij}), \sigma_{ij}^2\right]$, where $h_{ij}$ is channel state information between an $i^{th}$ base station antenna and a $j^{th}$ user antenna, and $\sigma_{ij}^2$ is a noise variance of the channel between the $i^{th}$ base station antenna and the $j^{th}$ user antenna. Neither the base station antenna node nor the user antenna node has an input feature.

A process of updating the feature of any connection edge, for example, a connection edge (k, n) is as follows: From the $1^{st}$ layer to an $L^{th}$ layer of the GNN, each layer undergoes two steps of operations: node aggregation and edge combination.

The node aggregation operation is performed. The aggregation operation is performed on the previous-layer features of the first adjacent edges (that is, connection edges that share a node k with the connection edge (k, n)), to obtain $\mathbf{u}_k^{(\ell)}$, and the aggregation operation is performed on the previous-layer features of the second adjacent edges (that is, connection edges that share a node n with the connection edge (k, n)), to obtain $\mathbf{b}_n^{(\ell)}$. In a possible implementation of the node aggregation operation, an operation of an $\ell^{th}$ layer is shown in the following formulas:

$$\mathbf{u}_k^{(\ell)} \;=\; \mathrm{PL}_u \underset{i=1, i\neq n}{\overset{N}{}} \left( q_u\left(\mathbf{d}_{ik}^{(\ell-1)}, \mathbf{P}^{(\ell)}\right)\right),$$

$$\mathbf{b}_n^{(\ell)} \;=\; \mathrm{PL}_b \underset{j=1, j\neq k}{\overset{K}{}} \left( q_b\left(\mathbf{d}_{nj}^{(\ell-1)}, \mathbf{Q}^{(\ell)}\right)\right),$$

$\mathbf{d}_{ij}^{(\ell-1)}$ is a feature of an $(\ell - 1)^{th}$ layer of the connection edge (i,j), $\mathrm{PL}_u(\cdot)$ and $\mathrm{PL}_b(\cdot)$ separately represent pooling functions, and $q_u(\cdot, \mathbf{P}^{(\ell)})$ and $q_b(\cdot, \mathbf{Q}^{(\ell)})$ are functions respectively including trainable parameters $\mathbf{P}^{(\ell)}$ and $\mathbf{Q}^{(\ell)}$.

The edge combination operation is performed, and a combination operation is performed on the previous-layer feature of the connection edge (k, n) and node aggregation results $\mathbf{u}_k^{(\ell)}$ and $\mathbf{b}_n^{(\ell)}$, to obtain a current-layer feature of the connection edge (k, n). In a possible implementation of the edge combination operation, an operation of the $\ell^{th}$ layer is shown in the following formula:

$$\mathbf{d}_{nk}^{(\ell)} = \mathrm{CB}\left(\mathbf{d}_{nk}^{(\ell-1)}, \mathbf{u}_k^{(\ell)}, \mathbf{b}_n^{(\ell)}, \mathbf{S}^{(\ell)}\right)$$

$\mathrm{CB}(\cdot)$ is a combination function that includes a trainable parameter $\mathbf{S}^{(\ell)}$.

After L-layer GNN processing (that is, node aggregation and edge combination), the output feature $\mathbf{d}_{nk}^{(L)}$ of the edge (k, n) is obtained, and a precoding scheme and a user selection scheme are further obtained.

The precoding vector (which may also be referred to as the precoding scheme) corresponding to the connection edge (k, n) is: $\mathbf{V}_{nk} = \mathbf{d}_{nk}^{(L)}$.

User selection scheme: $\mathbf{z}_k = q_z\left(\mathbf{d}_{ik}^{(L)}, \mathbf{R}\right)$ is obtained by aggregating output features of all edges connected to the user antenna node k, where $q_z(\cdot, \mathbf{R})$ is a function including a trainable parameter $\mathbf{R}$. Optionally, when $q_z$ is a linear function, an implementation is $z_k = \mathbf{R}d_{ik}^{(L)}$. $\mathbf{z}_k$ is input into the multi-layer perceptron (MLP). 0 or 1 is output. 1 indicates that the user antenna is selected, and 0 indicates that the user antenna is not selected.

It can be learned that, in the LastLayer scheme, only the feature $\mathbf{d}_{nk}^{(L)}$ of the last layer is used in the user selection scheme, and therefore the scheme is referred to as the LastLayer scheme.

Another implementation is an AllLayer scheme. A specific implementation of the AllLayer scheme is as follows: The graph representation is constructed by using a base station antenna and a user antenna. The base station antenna and the user antenna are separately nodes, and the connection edge is a connection line between the base station antenna and the user antenna. The channel information and the initial input feature such as [1] are input into the GNN. For example, the feature of the connection edge is $\left[\mathrm{Re}\left(h_{ij}\right), \mathrm{Im}\left(h_{ij}\right), \sigma_{ij}^2\right]$, where $h_{ij}$ is channel state information between an $i$th base station antenna and a $j$th user antenna, and $\sigma_{ij}^2$ is a noise variance of the channel between the $i$th base station antenna and the $j$th user antenna. The input feature of the user antenna node is [1], and the base station antenna node has no input feature.

The following operation is performed on any connection edge. For example, a process of updating the feature of the connection edge (k, n) is as follows: From the 1st layer to an $L$th layer of the GNN, each layer undergoes the following operations.

The node aggregation operation is performed. The aggregation operation is performed on the previous-layer features of the third adjacent edges (that is, connection edges that share a node k with the connection edge (k, n)), to obtain $\mathbf{u}_k^{(\ell)}$, and the aggregation operation is performed on the previous-layer features of the fourth adjacent edges (that is, connection edges that share a node n with the connection edge (k, n)), to obtain $\mathbf{b}_n^{(\ell)}$. In a possible implementation of the node aggregation operation, an operation of an $\ell$th layer is shown in the following formulas:

$$\mathbf{u}_k^{(\ell)} \quad = \quad \mathrm{PL}_u \overset{N}{\underset{i=1, i \neq n}{}} \left( q_u \left( \mathbf{d}_{ik}^{(\ell-1)}, \mathbf{P}^{(\ell)} \right) \right),$$

$$\mathbf{b}_n^{(\ell)} \quad = \quad \mathrm{PL}_b \overset{K}{\underset{j=1, j \neq k}{}} \left( q_b \left( \mathbf{d}_{nj}^{(\ell-1)}, \mathbf{Q}^{(\ell)} \right) \right),$$

$\mathbf{d}_{ij}^{(\ell-1)}$ is a feature of an $(\ell$ - 1)th layer of the edge (i, j), $\mathrm{PL}_u(\cdot)$ and $\mathrm{PL}_b(\cdot)$ separately represent pooling functions, and $q_u(\cdot, \mathbf{P}^{(\ell)})$ and $q_b(\cdot, \mathbf{Q}^{(\ell)})$ are functions respectively including trainable parameters $\mathbf{P}^{(\ell)}$ and $\mathbf{Q}^{(\ell)}$.

The edge combination operation is performed, and an edge combination operation is performed on the previous-layer feature of the connection edge (k, n) and node aggregation results $\mathbf{u}_k^{(\ell)}$ and $\mathbf{b}_n^{(\ell)}$. In a possible implementation of the edge combination operation, an operation of the $\ell$th layer is shown in the following formula:

$$\mathbf{e}_{nk}^{(\ell)} = \mathrm{CB}\left( \mathbf{d}_{nk}^{(\ell-1)}, \mathbf{u}_k^{(\ell)}, \mathbf{b}_n^{(\ell)}, \mathbf{S}^{(\ell)} \right)$$

$\mathrm{CB}(\cdot)$ is a combination function that includes a trainable parameter $\mathbf{S}^{(\ell)}$.

A current-layer feature $d_{nk}^{(\ell)}$ is obtained through processing based on an output $\mathbf{e}_{nk}^{(\ell)}$ of the edge combination operation and the previous-layer feature $\mathbf{z}_k^{(\ell-1)}$ of the user antenna node. A possible implementation is shown in the following formula:

$$\mathbf{d}_{nk}^{(l)} = \mathbf{f}_l\left( \mathbf{e}_{nk}^{(l)}, \mathbf{z}_k^{(l-1)}, \mathbf{M}^{(l)} \right)$$

$f_l(\cdot, M^{(l)})$ is a function including a trainable parameter $M^{(l)}$. Optionally, an implementation of $f_l$ may be $d_{nk}^{(l)} = M_1^{(l)} e_{nk}^{(l)} + M_2^{(l)} z_k^{(l-1)}$, where $M^{(l)} = \left\{ M_1^{(l)}, M_2^{(l)} \right\}$.

A manner of updating the user antenna node is that the feature of the user antenna at each layer is obtained by processing previous-layer features of all edges connected to the user antenna and a previous-layer feature of the node. A possible implementation is shown in the following formula:

$$z_k^{(1)} = g_1\left(z_k^{(1-1)}, \sum_{i=1}^{N} d_{ik}^{(1-1)}, T^{(1)}\right)$$

$g_1(\cdot, T^{(l)})$ is a function including a trainable parameter $T^{(l)}$. Optionally, an implementation of $g_l$ may be

$z_k^{(1)} = T_1^{(1)} z_k^{(1-1)} + T_2^{(1)} \sum_{i=1}^{N} d_{ik}^{(1-1)}$, where $T^{(1)} = \left\{T_1^{(1)}, T_2^{(1)}\right\}$.

After L-layer GNN processing (that is, node aggregation and edge combination), the output feature $d_{nk}^{(L)}$ of the connection edge (k, n) and the output feature $z_k^{(L)}$ of the user antenna node are obtained, and a precoding scheme and a user selection scheme are further obtained.

Precoding scheme: $\mathbf{V}_{nk} = \mathbf{d}_{nk}^{(L)}$.

User selection scheme: $\mathbf{z}_k^{(L)} \in \{0,1\}$, where 1 indicates that the user antenna is selected, and 0 indicates that the user antenna is not selected.

It can be learned that, in the AllLayer scheme, the connection edge feature output by the last layer in the GNN is used in the precoding scheme, and the connection edge features and the user antenna node features of all layers except the last layer in the GNN are used in the user selection scheme. Therefore, the scheme is referred to as the AllLayer scheme.

To further improve generalization of the precoding method provided in this embodiment of this application, a plurality of sets of GNN parameters may be trained for different SNR ranges and different quantities of antennas under a fixed GNN structure, and then corresponding GNN parameters are loaded based on an SNR and a quantity of antennas in an actual scenario, to perform inference, so that good generalization is achieved in different wireless communication scenarios.

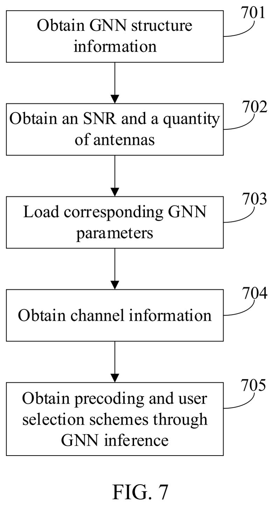

FIG. 7 is a flowchart of implementation of a precoding method according to an embodiment of this application. The method may be applied to a transmit end device, for example, a base station, to effectively reduce complexity of precoding a to-be-sent signal, and determine a target receive antenna of a receive end device in a MIMO system. As shown in FIG. 7, the precoding method provided in this embodiment of this application includes at least step S701 to step S705.

In step S701, GNN structure information is obtained.

First, the GNN structure information is determined. The GNN structure information includes at least a neural network type (for example, full connection, a CNN, or a transformer), a quantity of layers, a quantity of neurons at each layer, a neuron connection manner, and the like. In a possible implementation, all neural networks used in a GNN are fully connected neural networks. In other words, the trainable parameters $P^{(\ell)}$, $Q^{(\ell)}$, $S^{(\ell)}$, R, $M^{(l)}$, and $T^{(l)}$ are weight parameters and bias parameters corresponding to the fully connected neural network.

A GNN structure may be predefined in standards, or may be preconfigured by vendors. A plurality of sets of neural network parameters are trained offline for different SNRs, different quantities of base station antennas, and different quantities of user antennas. A correspondence between each set of neural network parameters and an SNR range and a range of a quantity of antennas may be shown in Table 1.

Table 1

| GNN parameter | SNR range | Range of a quantity of base station antennas | Range of a quantity of user antennas |
|---|---|---|---|
| W1 | [SNR0, SNR1) | [M0, M1) | [N0, N1) |
| W2 | [SNR1, SNR2) | [M1, M2) | [N1, N2) |
| ... | | | |
| Wn | [SNRn-1, SNRn] | [Mn-1, Mn] | [Nn-1, Nn] |

When sending data to a user terminal, the base station first obtains the GNN structure information.

Step S702: Obtain information about an SNR and a quantity of antennas (the quantity of base station antennas and the quantity of user antennas) in a current scenario.

Step S703: Load corresponding GNN parameters.

The GNN parameters corresponding to the SNR and the quantity of antennas in the current scenario are obtained. For example, the GNN parameters corresponding to the SNR and the quantity of antennas in the current scenario are obtained in a table lookup manner, and then the GNN parameters are loaded to the GNN structure obtained in step S701, to obtain a GNN corresponding to the SNR and the quantity of antennas in the current scenario. The GNN parameters obtained in this step may be pre-stored on the base station by the device vendor, or may be stored on a corresponding network element, and downloaded and obtained by the base station.

Step S704: Obtain channel information.

The channel information includes channel state information and a noise variance in the current scenario.

Step S705: Obtain precoding and user selection schemes through GNN inference.

The channel state information and the noise variance are input into the GNN, to obtain the precoding and user selection schemes, a to-be-sent signal is precoded based on the obtained schemes, and precoded data is sent to a target user antenna of the user terminal by using a base station antenna, thereby implementing communication between the base station and the user terminal.

Step S702 to step S705 are repeated to implement continuous communication between the base station and the user terminal.

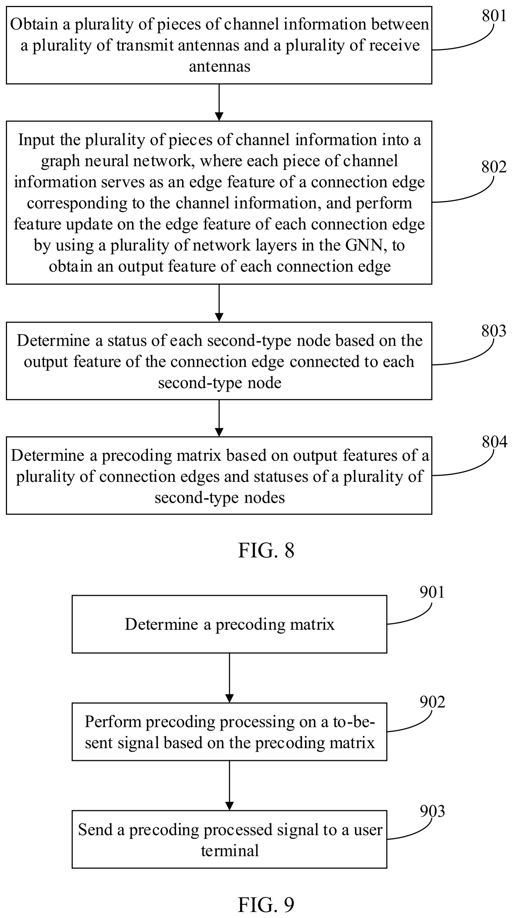

FIG. 8 is a schematic flowchart of a precoding method according to an embodiment of this application. The method may be applied to any MIMO wireless communication system in which precoding needs to be performed, to reduce precoding implementation complexity of the MIMO wireless communication system and determine user selection of a receive antenna of a receive end device, thereby reducing power consumption and a latency of the MIMO wireless communication system and improving transmission efficiency of the communication system and reliability of a communication link. As shown in FIG. 8, the precoding method provided in this embodiment of this application includes at least step S801 to step S804.

In step S801, a plurality of pieces of channel information between a plurality of transmit antennas and a plurality of receive antennas are obtained.

Channel information between each transmit antenna and each receive antenna is obtained, to obtain the plurality of pieces of channel information between the plurality of transmit antennas and the plurality of receive antennas. Optionally, the channel information between each transmit antenna and each receive antenna includes channel state information and/or channel noise information. Optionally, the channel noise information may include noise variance information of a channel and/or signal-to-noise ratio information of the channel, and the channel state information and the channel noise information between each transmit antenna and each receive antenna may be obtained in any feasible manner. This is not limited in this embodiment of this application.

In step S802, the plurality of pieces of channel information are input into a GNN, each piece of channel information is used as a feature of a connection edge corresponding to the channel information, and feature update is performed on the feature of each connection edge by using a plurality of network layers in the GNN, to obtain an output feature of each connection edge.

Each piece of channel information obtained in step S802 is used as an input of the GNN, and each piece of channel information is used as an edge input feature of the connection edge. For example, channel information of a connection edge (i, j) is $\left[ \mathrm{Re}\left( h_{ij} \right), \mathrm{Im}\left( h_{ij} \right), \sigma_{ij}^{2} \right]$, where $h_{ij}$ is channel state information between an $i^{th}$ transmit antenna and a $j^{th}$ receive antenna, and $\sigma_{ij}^{2}$ is a noise variance of a channel between the $i^{th}$ transmit antenna and the $j^{th}$ receive antenna. In this case, an edge input feature of the connection edge (i, j) is $\left[ \mathrm{Re}\left( h_{ij} \right), \mathrm{Im}\left( h_{ij} \right), \sigma_{ij}^{2} \right]$.

Then, feature update is performed on the feature of each connection edge by using the plurality of network layers in the GNN, to obtain the output feature of each connection edge. A feature update operation performed by each network layer in the plurality of network layers of the GNN on each connection edge may be implemented in a plurality of update manners, for example, the LastLayer implementation scheme and the AllLayer scheme that are mentioned above. For specific implementations of the LastLayer implementation scheme and the AllLayer scheme, refer to the foregoing descriptions. For brevity, details are not described herein again.

The connection edge is a connection edge in a graph representation that is of a wireless communication system and that is obtained by constructing a graph based on receive antennas and transmit antennas of the wireless communication system. For example, the wireless communication system includes at least one transmit end device configured to send a signal and at least one receive end device configured to receive a signal. The at least one transmit end device includes a plurality of transmit antennas, and the at least one receive end device includes a plurality of receive antennas. The graph representation includes a plurality of first-type nodes that represent the transmit antennas, a plurality of second-type nodes that represent the receive antennas, and a plurality of connection edges that connect the first-type nodes to the second-type nodes. The connection edges represent channels between the transmit antennas and the receive antennas.

It may be understood that, during initial graph construction, the connection edge in the graph representation connects each first-type node to each second-type node, indicating that a channel construction capability exists between each transmit antenna and each receive antenna. However, as the GNN updates an edge feature of the connection edge, a feature finally output by the connection edge represents a precoding vector.

For example, the wireless communication system includes a base station and a plurality of user terminals. The base station has a plurality of base station antennas, and the plurality of user terminals have a plurality of user antennas. For example, the plurality of user terminals include a user terminal 1 and a user terminal 2, the user terminal 1 has a user antenna 1 and a user antenna 2, and the user terminal 2 has a user antenna 1 and a user antenna 2. The plurality of base station antennas are the plurality of transmit antennas, and the plurality of receive antennas are the user antennas. The base station antennas may be, for example, AN 1, AN 2, AN 3, AN 4, AN 5, and AN 6, and the user antennas may be, for example, UE 11, UE 12, UE 21, and UE 22. The graph representation of the wireless communication system may be shown by a part in a dashed-line box in FIG. 6.

In step S803, a status of each second-type node is determined based on the feature of the connection edge connected to each second-type node.

The status of the second-type node may be determined in a plurality of implementations, for example, the LastLayer implementation scheme and the AllLayer scheme that are mentioned above. For specific implementations of the LastLayer implementation scheme and the AllLayer scheme, refer to the foregoing descriptions. For brevity, details are not described herein again.

In step S804, a precoding matrix is determined based on the output features of the plurality of connection edges and statuses of the plurality of second-type nodes.

The statuses of the second-type nodes include a first status and a second status, the first status indicates that the second-type node is a target second-type node, and the second status indicates that the second-type node is a non-target second-type node; an output feature of a target connection edge is determined as a target precoding vector, where the target connection edge is a connection edge connected to the target second-type node; and the precoding matrix is determined based on the target precoding vector. For example, if it is determined, based on the second-type node statuses output by the GNN, that target second-type nodes are UE 11 and UE 21, target connection edges are connection edges connected to the target second-type nodes. For example, if the target connection nodes are (AN 1, UE 11), (AN 2, UE 11), (AN 3, UE 11), (AN 4, UE 11), (AN 5, UE 11), (AN 6, UE 11), (AN 1, UE 21), (AN 2, UE 21), (AN 3, UE 21), (AN 4, UE 21), (AN 5, UE 21) and (AN 6, UE 21), the precoding matrix is a precoding matrix including precoding vectors corresponding to the target connection edges (AN 1, UE 11), (AN 2, UE 11), (AN 3, UE 11), (AN 4, UE 11), (AN 5, UE 11), (AN 6, UE 11), (AN 1, UE 21), (AN 2, UE 21), (AN 3, UE 21), (AN 4, UE 21), (AN 5, UE 21) and (AN 6, UE 21).

In another example, to further improve generalization of the precoding method provided in this embodiment of this application, a plurality of sets of GNN parameters may be trained for different SNR ranges and different quantities of antennas under a fixed GNN structure, and then corresponding GNN parameters are loaded based on an SNR and a quantity of antennas in an actual scenario, to perform inference, so that good generalization is achieved in different wireless communication scenarios.

For a specific implementation of the precoding method with a plurality of sets of GNN parameters, refer to detailed descriptions of FIG. 7. For brevity, details are not described herein again.

It may be understood that the GNN mentioned above is a trained GNN, and the GNN trains a parameter matrix in the GNN based on training data. A training method may be an unsupervised learning manner or a supervised learning manner.

For example, in unsupervised learning, a precoding matrix $\hat{V}$ is obtained based on outputs

$$d_{nk}^{(L)} = [Re(\hat{v}_{nk}), Im(\hat{v}_{nk})]$$ on all edges of the GNN, a total system throughput $\sum_{k=1}^{K} R_k\left(H, \hat{V}\right)$ is calculated, a gradient of a parameter $\theta_V$ is calculated for the total system throughput, and the parameter $\theta_V$ is updated by using the gradient descent method described above.

Supervised learning: In supervised learning, a label (that is, a target precoding matrix) V* corresponding to channel information is provided, a loss function (for example, a mean square error) is calculated based on the precoding matrix V output by the GNN and the label V*, a gradient of a parameter $\theta_V$ is calculated for the loss function, and the parameter $\theta_V$ is updated by using the gradient descent method described above.

The GNN mentioned in this example of this application may be further extended and applied to other aspects of wireless policy optimization, for example, channel estimation and MIMO detection.

It should be explained and noted that the precoding method provided in this embodiment of this application is applied to a wireless communication scenario in which a single base station performs wireless communication with at least one user terminal. In this scenario, the precoding method provided in this embodiment of this application may be performed by the base station. A specific implementation method is shown in FIG. 9.

As shown in FIG. 9, the precoding method provided in this application includes at least step S901 to step S903.

In step S901, a precoding matrix is determined.

A base station obtains channel information. Optionally, the channel information includes channel state information, or the channel information includes the channel state information and channel noise information, or the channel information includes the channel noise information. In an example, the channel noise information includes noise variance information of a channel and/or signal-to-noise ratio information of the channel.

The channel information may be obtained in any feasible manner. This is not specifically limited in this embodiment of this application.

Then, the precoding matrix is determined based on the channel information. For a specific implementation of determining the precoding matrix based on the channel information, refer to the foregoing detailed descriptions of FIG. 8. For brevity, details are not described herein again.

In step S902, precoding processing is performed on a to-be-sent signal based on the precoding matrix.

The base station performs precoding processing on the to-be-sent signal by using the precoding matrix obtained in the previous step, to obtain a precoded signal.

In step S903, a precoding processed signal is sent to a user terminal.

The base station sends the precoding processed signal to a receive antenna of the user terminal by using a plurality of base station antennas, to implement communication with a receive end device.

For example, the base station sends the precoding processed signal to receive antennas of a plurality of user terminals by using the plurality of base stations, to implement communication with the plurality of user terminals. In this way, multi-user interference is effectively eliminated by performing precoding processing on the to-be-sent signal, so that system capacity is greatly increased.

It should be explained and noted that, when the base station performs the precoding method provided in this embodiment of this application, step S901 may be performed by a central unit (centralized unit, CU) in the base station for implementation, and step S902 and step S903 may be performed by a distributed unit (distributed unit, DU) in the base station for implementation.

It may be understood that in different systems, the CU (or a CU-CP and a CU-UP) and the DU may also have different names, but a person skilled in the art may understand meanings of the names. For example, in an open-radio access network (open-radio access network, ORAN) system, the CU may also be referred to as an open central unit (open centralized unit, O-CU) or an open CU, the DU may also be referred to as an open distributed unit (open distributed unit, O-DU), the central unit control plane (centralized unit control plane, CU-CP) may also be referred to as an open central unit control plane (open centralized unit control plane, O-CU-CP) or an open CU-CP, and the central unit user plane (centralized unit user plane, CU-UP) may also be referred to as an open central unit user plane (open centralized unit user plane, O-CU-UP) or an open CU-UP. This is not specifically limited in this application. Any unit in the CU, the CU-CP, the CU-UP, and the DU in this application may be implemented by using a software module, a hardware module, or a combination of the software module and the hardware module.

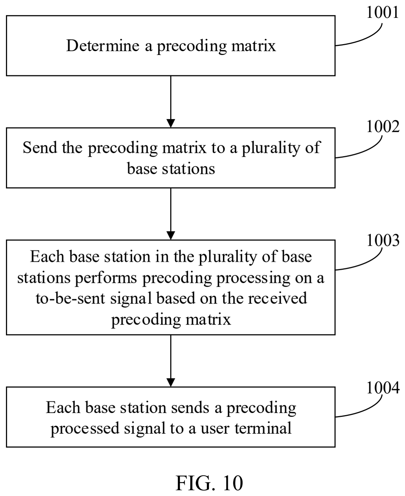

In another example, the precoding method provided in this embodiment of this application is applied to a wireless communication scenario in which a plurality of base stations perform communication with at least one user terminal. For example, in a wireless communication system using a user centric no cell (user centric no cell, UCNC) network technology, a plurality of base stations serve user terminals in one cell. In this scenario, the precoding method provided in this embodiment of this application may be performed by a third-party network device. A specific implementation method is shown in FIG. 10. It may be understood that the third-party network device herein is for the base station and the user terminal, and means another network device other than the base station and the user terminal.

As shown in FIG. 10, the precoding method provided in this application includes at least step S 1001 to step S1004.

In step S 1001, a precoding matrix is determined.

A third-party network device sends, to a base station, an obtaining request used to obtain channel information. The base station sends the channel information to the third-party network device in response to the obtaining request. The third-party network device receives the channel information, to obtain the channel information.

Optionally, the channel information includes channel state information, or the channel information includes the channel state information and channel noise information, or the channel information includes the channel noise information. In an example, the channel noise information includes noise variance information of a channel and/or signal-to-noise ratio information of the channel.

Then, the precoding matrix is determined based on the channel information. For a specific implementation of determining the precoding matrix based on the channel information, refer to the foregoing detailed descriptions of FIG. 8. For brevity, details are not described herein again.

In step S 1002, the precoding matrix is sent to a plurality of base stations.

After determining the precoding matrix, the third-party network device delivers the precoding matrix to each base station in the plurality of base stations, so that each base station obtains the precoding matrix.

In step S1003, each base station in the plurality of base stations performs precoding processing on a to-be-sent signal based on the received precoding matrix.

Each base station performs precoding processing on the to-be-sent signal based on the received precoding matrix, to obtain a precoding processed signal.

In step S 1004, each base station sends the precoding processed signal to a user terminal.

Each base station sends the precoding processed signal to a receive antenna of the user terminal by using base station antennas of the base station, to implement communication with a receive end device.

For example, the base stations send the precoding processed signal to receive antennas of a plurality of user terminals by using the plurality of base stations, to implement communication with the plurality of user terminals. In this way, multi-base station interference is effectively eliminated by performing precoding processing on the to-be-sent signal, so that system capacity is greatly increased.

Based on a same concept as that of the embodiment of the foregoing precoding method, an embodiment of this application further provides a precoding apparatus 1100. The precoding apparatus 1100 includes units or modules configured to implement the steps in the precoding methods shown in FIG. 6 to FIG. 9.

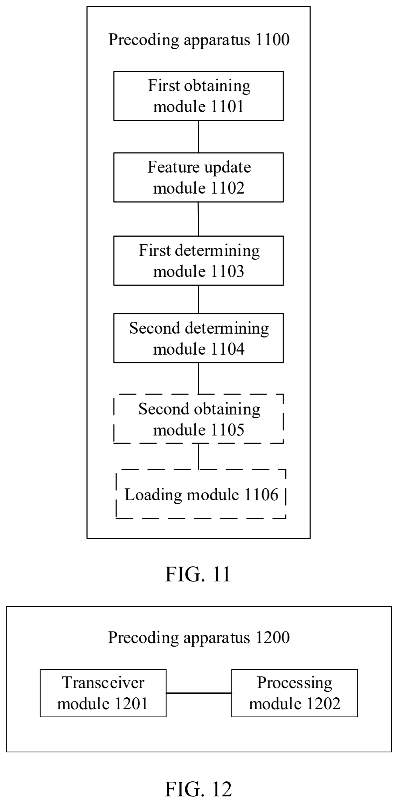

FIG. 11 is a diagram of a structure of a precoding apparatus according to an embodiment of this application. The apparatus is used in a wireless communication system. The wireless communication system includes at least one transmit end device and at least one receive end device. The at least one transmit end device includes a plurality of transmit antennas, and the at least one receive end device includes a plurality of receive antennas, to precode a signal to be sent by the transmit end device in the wireless communication system. This improves transmission efficiency of the wireless communication system and reliability of a communication link, and reduces precoding implementation complexity, thereby reducing a latency and power consumption of the wireless communication system. For example, the apparatus may be deployed in a base station, to precode a signal to be sent by the base station.

As shown in FIG. 11, the precoding apparatus 1100 includes at least: a first obtaining module 1101, a feature update module 1102, a first determining module 1103, and a second determining module 1104. The first obtaining module 1101 is configured to obtain a plurality of pieces of channel information between the plurality of transmit antennas and the plurality of receive antennas, where the channel information includes channel state information and/or channel noise information. The feature update module 1102 is configured to: input the plurality of pieces of channel information into a graph neural network, where each piece of channel information serves as a feature of a connection edge corresponding to the channel information, and perform feature update on the feature of each connection edge by using a plurality of network layers in the graph neural network, to obtain an output feature of each connection edge, where the connection edge is a connection edge in a graph representation of the wireless communication system, the graph representation includes a plurality of first-type nodes, a plurality of second-type nodes, and the connection edges for connecting the first-type nodes to the second-type nodes, the plurality of first-type nodes represent the plurality of transmit antennas, the plurality of second-type nodes represent the plurality of receive antennas, and each connection edge represents a channel between one transmit antenna and one receive antenna. The first determining module 1103 is configured to determine a status of each second-type node based on the feature of the connection edge connected to each second-type node. The second determining module 1104 is configured to determine a precoding matrix based on output features of the plurality of connection edges and statuses of the plurality of second-type nodes, where the precoding matrix is used to precode a signal to be sent by the transmit end device.

In a possible implementation, the feature update module 1102 is specifically configured to: perform an aggregation operation on previous-layer features of first adjacent edges corresponding to each connection edge, to obtain a first aggregation result, where the first adjacent edge is a connection edge that shares the first-type node with each connection edge; perform an aggregation operation on previous-layer features of second adjacent edges corresponding to each connection edge, to obtain a second aggregation result, where the second adjacent edge is a connection edge that shares the second-type node with each connection edge; perform a combination operation on the first aggregation result, the second aggregation result, and a previous-layer feature of each connection edge, to obtain a first combination result; and update the feature of each connection edge based on the first combination result.

In another possible implementation, the first aggregation result is further related to a first aggregation parameter, the second aggregation result is further related to a second aggregation parameter, and the first combination result is further related to a first combination parameter, where the first aggregation parameter, the second aggregation parameter, and the first combination parameter are parameters obtained through training of the graph neural network.

In another possible implementation, the graph neural network includes a multi-layer perceptron subnetwork; and the first determining module 1103 is specifically configured to: process the output feature of the connection edge connected to each second-type node, to obtain a processing result; and use the processing result as an input of the multi-layer perceptron subnetwork, and output the status of each second-type node.

In another possible implementation, the processing result is further related to a processing parameter, and the processing parameter is obtained through training of the graph neural network.

In another possible implementation, an input of the graph neural network further includes an initial feature of each second-type node; and the feature update module 1102 is specifically configured to: perform an aggregation operation on previous-layer features of third adjacent edges corresponding to each connection edge, to obtain a third aggregation result, where the third adjacent edge is a connection edge that shares the first-type node with each connection edge; perform an aggregation operation on previous-layer features of fourth adjacent edges corresponding to each connection edge, to obtain a fourth aggregation result, where the fourth adjacent edge is a connection edge that shares the second-type node with each connection edge; perform a combination operation on the third aggregation result, the fourth aggregation result, and a previous-layer feature of each connection edge, to obtain a second combination result; and update the feature of each connection edge based on the first combination result and a previous-layer feature of the related second-type node, where the related second-type node is the second-type node connected to each connection edge.

In another possible implementation, the first determining module 1103 is specifically configured to: update the feature of each second-type node based on the previous-layer feature of the connection edge connected to each second-type node and the previous-layer feature of each second-type node; and determine the status of each second-type node based on a last-layer feature of each second-type node.

In another possible implementation, the third aggregation result is further related to a third aggregation parameter, the fourth aggregation result is further related to a fourth aggregation parameter, the second combination result is further related to a second combination parameter, feature update of each connection edge is further related to a first update parameter, and feature update of the second-type node is further related to a second update parameter, where the third aggregation parameter, the fourth aggregation parameter, the second combination parameter, the first update parameter, and the second update parameter are parameters obtained through training of the graph neural network.

In another possible implementation, the status of the second-type node includes a first status or a second status, the first status indicates that the second-type node is a target second-type node; and the second determining module 1104 is specifically configured to: determine an output feature of a target connection edge as a target precoding vector, where the target connection edge is a connection edge connected to the target second-type node; and determine the precoding matrix based on the target precoding vector.

In another possible implementation, the precoding apparatus 1100 provided in this application further includes a second obtaining module 1105 and a loading module 1106. The second obtaining module 1105 is configured to obtain a signal-to-noise ratio and a quantity of antennas of the wireless communication system, where the quantity of antennas is determined based on a quantity of the plurality of transmit antennas and a quantity of the plurality of receive antennas. The loading module 1106 is configured to load corresponding parameters of the graph neural network based on the signal-to-noise ratio and the quantity of antennas.

Optionally, the transmit end device includes a base station, and the receive end device includes a user terminal.

The precoding apparatus 1100 according to this embodiment of this application may correspondingly perform the methods described in embodiments of this application. In addition, the foregoing and other operations and/or functions of the modules in the precoding apparatus 1100 are respectively used to implement corresponding procedures of the methods in FIG. 6 to FIG. 10. For brevity, details are not described herein again.

FIG. 12 is a diagram of another structure of a precoding apparatus according to an embodiment of this application. The apparatus may alternatively be deployed in another network element. For example, the network element is communicatively connected to a plurality of base stations. The network element is configured to: determine a precoding matrix used by the plurality of base stations to precode a to-be-sent signal, and after determining the precoding matrix corresponding to the plurality of base stations, send the precoding matrix to the corresponding base stations, so that the corresponding base stations perform precoding processing on the to-be-sent signal based on the precoding matrix.

As shown in FIG. 12, the precoding apparatus 1200 provided in this embodiment of this application includes at least a transceiver module 1201 and a processing module 1202. The transceiver module 1201 may include a receiving module and/or a sending module, configured to obtain channel information. For example, the transceiver module includes the sending module and the receiving module. The sending module sends an obtaining request to a base station, the base station returns the channel information in response to the obtaining request, and the receiving module receives the channel information, so that the channel information is obtained. For another example, the transceiver module 1201 may alternatively include only a receiving module, configured to receive the channel information sent by the base station.

The processing module 1202 is configured to determine a precoding matrix based on the channel information. For a detailed implementation of determining the precoding matrix based on the channel information, refer to the foregoing detailed descriptions of FIG. 8. For brevity, details are not described herein again.

The sending module is further configured to send the precoding matrix to each base station in the plurality of base stations, so that each base station performs precoding processing on the to-be-sent signal based on the precoding matrix, to effectively eliminate multi-base station interference, thereby greatly improving system capacity.

Certainly, the precoding apparatus shown in FIG. 11 may alternatively be deployed in a third-party network element, and the precoding apparatus shown in FIG. 12 may alternatively be deployed in a base station. This is not limited in this embodiment of this application. When FIG. 12 is deployed in a base station, the processing module 1202 may implement functional steps of the first obtaining module 1101, the feature update module 1102, the first determining module 1103, the second determining module 1104, the second obtaining module 1105, and the loading module 1106 that are shown in FIG. 11. The transceiver module 1201 may include only a sending module, configured to send a precoded signal to a user terminal. Certainly, in some other examples, the transceiver module 1201 may alternatively include a sending module and a receiving module. The receiving module is configured to receive information sent by another network element.

It should be noted that a specific implementation of the precoding apparatus provided in this embodiment of this application including the precoding apparatuses shown in FIG. 11 and FIG. 12 may be a base station or a third device, or may be a chip or a functional unit in a base station or a third-party device, and the specific implementation of the precoding apparatus is not limited in this embodiment of this application.

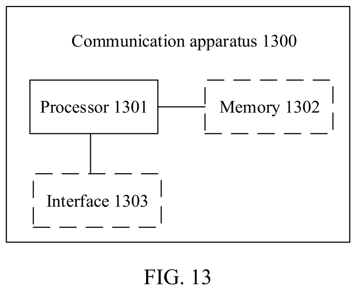

An embodiment of this application further provides a communication apparatus 1300. Refer to FIG. 13. The communication apparatus 1300 includes a processor 1301. The processor 1301 is coupled to a memory 1302. The memory 1302 is configured to store a computer program or instructions and/or data. The processor 1301 is configured to execute the computer program or instructions and/or the data stored in the memory 1302, so that the methods in the foregoing method embodiments are performed. The communication apparatus 1300 is configured to implement the precoding methods in the foregoing method embodiments.

Optionally, the communication apparatus 1300 includes one or more processors 1301.

Optionally, as shown in FIG. 13, the communication apparatus 1300 may further include the memory 1301.

Optionally, the communication apparatus 1300 may include one or more memories 1301.

Optionally, the memory 1302 and the processor 1301 may be integrated together or separately disposed.

Optionally, as shown in FIG. 13, the communication apparatus 1301 may further include an interface 1303, and the interface 1303 is configured to receive and/or send a signal. For example, the processor 1301 is configured to control the transceiver 1303 to receive and/or send signals.

It should be understood that, in this embodiment of this application, the processor 1301 may be a central processing unit (central processing unit, CPU). The processor 1301 may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like.

The memory 1302 may include a read-only memory and a random access memory, and provides instructions and data for the processor 1001. The memory 1302 may further include a non-volatile random access memory.

The memory 1302 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be understood that the communication apparatus 1300 according to this embodiment of this application may perform and implement the methods shown in FIG. 6 to FIG. 10 in embodiments of this application. For detailed descriptions of implementations of the methods, refer to the foregoing descriptions. For brevity, details are not described herein again.

It may be understood that the communication apparatus 1300 shown in FIG. 13 may be a chip or a network device. When the communication apparatus 1300 is a chip, the chip includes a processor, a memory, and an interface. The interface may be an input/output circuit or a communication interface. The processor may be a processing module, a microprocessor, an integrated circuit, or the like integrated on the chip. The precoding matrix in the foregoing methods may be understood as an output of the chip, and the channel information in the foregoing methods may be understood as an input of the chip.

When the communication apparatus 1300 is a network device, for example, a base station, the network device includes a processor, a memory, and an interface. The interface may be a transceiver. The transceiver is used for communication between a base station and another network device. The memory stores a computer program or instructions and/or data. The processor executes the computer program or instructions and/or the data stored in the memory, so that the precoding methods in the foregoing method embodiments are performed.

An embodiment of this application provides a computer-readable storage medium, storing a computer program. When the computer instruction is executed by a processor, the methods mentioned above are implemented.

An embodiment of this application provides a chip. The chip includes at least one processor and an interface. The at least one processor determines program instructions or data through the interface. The at least one processor is configured to execute the program instructions, to implement the methods mentioned above.

An embodiment of this application provides a computer program or a computer program product. The computer program or the computer program product includes instructions. When the instructions are executed, a computer is enabled to perform the methods mentioned above.

A person of ordinary skill in the art may be further aware that, units and algorithm steps of the examples described in combination with embodiments disclosed in this specification can be implemented by electronic hardware, computer software, or a combination of the two. To clearly describe interchangeability between the hardware and the software, compositions and steps of each example have been generally described in the foregoing descriptions based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

The steps of the methods or algorithms described in combination with embodiments disclosed in this specification may be implemented by hardware, a software module executed by a processor, or a combination of the two. The software module may be disposed in a random access memory (RAM), an internal memory, a read-only memory (ROM), an electrically programmable ROM, an electrically erasable programmable ROM, a register, a hard disk, a removable disk, a compact disc read-only memory (compact disc read-only memory, CD-ROM), or a storage medium in any other form well-known in the art.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A precoding method, applied to a wireless communication system, wherein the wireless communication system comprises at least one transmit end device and at least one receive end device, the at least one transmit end device comprises a plurality of transmit antennas, the at least one receive end device comprises a plurality of receive antennas, and the method comprises:

   obtaining a plurality of pieces of channel information between the plurality of transmit antennas and the plurality of receive antennas, wherein the channel information comprises channel state information and/or channel noise information;

   inputting the plurality of pieces of channel information into a graph neural network, wherein each piece of channel information serves as an initial feature of a connection edge corresponding to the channel information, and performing feature update on the feature of each connection edge by using a plurality of network layers in the graph neural network, to obtain an output feature of each connection edge, wherein the connection edge is a connection edge in a graph representation of the wireless communication system, the graph representation comprises a plurality of first-type nodes, a plurality of second-type nodes, and the connection edges for connecting the first-type nodes to the second-type nodes, the plurality of first-type nodes represent the plurality of transmit antennas, the plurality of second-type nodes represent the plurality of receive antennas, and each connection edge represents a channel between one transmit antenna and one receive antenna;

   determining a status of each second-type node based on the feature of the connection edge connected to each second-type node; and

   determining a precoding matrix based on output features of the plurality of connection edges and statuses of the plurality of second-type nodes, wherein the precoding matrix is used to precode a signal to be sent by the transmit end device.

2. The method according to claim 1, wherein the performing feature update on the feature of each connection edge separately by using each network layer in the plurality of network layers specifically comprises:

   performing an aggregation operation on previous-layer features of first adjacent edges corresponding to each connection edge, to obtain a first aggregation result, wherein the first adjacent edge is a connection edge that shares the first-type node with each connection edge;

performing an aggregation operation on previous-layer features of second adjacent edges corresponding to each connection edge, to obtain a second aggregation result, wherein the second adjacent edge is a connection edge that shares the second-type node with each connection edge;

performing a combination operation on the first aggregation result, the second aggregation result, and a previous-layer feature of each connection edge, to obtain a first combination result; and

updating the feature of each connection edge based on the first combination result.

3. The method according to claim 2, wherein the first aggregation result is further related to a first aggregation parameter, the second aggregation result is further related to a second aggregation parameter, and the first combination result is further related to a first combination parameter, wherein

the first aggregation parameter, the second aggregation parameter, and the first combination parameter are parameters obtained through training of the graph neural network.

4. The method according to any one of claims 1 to 3, wherein the graph neural network comprises a multi-layer perceptron subnetwork; and

the determining the status of each second-type node based on the feature of the connection edge connected to each second-type node comprises:

processing the output feature of the connection edge connected to each second-type node, to obtain a processing result; and

using the processing result as an input of the multi-layer perceptron subnetwork, and outputting the status of each second-type node.

5. The method according to claim 4, wherein the processing result is further related to a processing parameter, and the processing parameter is a parameter obtained through training of the graph neural network.

6. The method according to claim 1, wherein an input of the graph neural network further comprises an initial feature of each second-type node; and

the performing feature update on the feature of each connection edge separately by using each network layer in the plurality of network layers comprises:

performing an aggregation operation on previous-layer features of third adjacent edges corresponding to each connection edge, to obtain a third aggregation result, wherein the third adjacent edge is a connection edge that shares the first-type node with each connection edge;

performing an aggregation operation on previous-layer features of fourth adjacent edges corresponding to each connection edge, to obtain a fourth aggregation result, wherein the fourth adjacent edge is a connection edge that shares the second-type node with each connection edge;

performing a combination operation on the third aggregation result, the fourth aggregation result, and a previous-layer feature of each connection edge, to obtain a second combination result; and

updating the feature of each connection edge based on the second combination result and a previous-layer feature of the related second-type node, wherein the related second-type node is the second-type node connected to each connection edge.

7. The method according to claim 6, wherein the determining the status of each second-type node based on the feature of the connection edge connected to each second-type node comprises:

updating the feature of each second-type node based on the previous-layer feature of the connection edge connected to each second-type node and the previous-layer feature of each second-type node; and

determining the status of each second-type node based on a last-layer feature of each second-type node.

8. The method according to claim 7, wherein the third aggregation result is further related to a third aggregation parameter, the fourth aggregation result is further related to a fourth aggregation parameter, the second combination result is further related to a second combination parameter, feature update of each connection edge is further related to a first update parameter, and feature update of the second-type node is further related to a second update parameter, wherein

the third aggregation parameter, the fourth aggregation parameter, the second combination parameter, the first update parameter, and the second update parameter are parameters obtained through training of the graph neural network.

9. The method according to any one of claims 1 to 8, wherein the status of the second-type node comprises a first status or a second status, the first status indicates that the second-type node is a target second-type node, and the second status indicates that the second-type node is a non-target second-type node; and
the determining the precoding matrix based on the output features of the plurality of connection edges and the statuses of the plurality of second-type nodes comprises:

determining an output feature of a target connection edge as a target precoding vector, wherein the target connection edge is a connection edge connected to the target second-type node; and
determining the precoding matrix based on the target precoding vector.

10. The method according to any one of claims 1 to 9, further comprising:

obtaining a signal-to-noise ratio and a quantity of antennas of the wireless communication system, wherein the quantity of antennas is determined based on a quantity of the plurality of transmit antennas and a quantity of the plurality of receive antennas; and
loading corresponding parameters of the graph neural network based on the signal-to-noise ratio and the quantity of antennas.

11. The method according to any one of claims 1 to 10, wherein the transmit end device comprises a base station, and the receive end device comprises a user terminal.

12. A precoding apparatus, used in a wireless communication system, wherein the wireless communication system comprises at least one transmit end device and at least one receive end device, the at least one transmit end device comprises a plurality of transmit antennas, the at least one receive end device comprises a plurality of receive antennas, and the apparatus comprises:

a first obtaining module, configured to obtain a plurality of pieces of channel information between the plurality of transmit antennas and the plurality of receive antennas, wherein the channel information comprises channel state information and/or channel noise information;
a feature update module, configured to: input the plurality of pieces of channel information into a graph neural network, wherein each piece of channel information serves as feature of a connection edge corresponding to the channel information, and perform feature update on the feature of each connection edge by using a plurality of network layers in the graph neural network, to obtain an output feature of each connection edge, wherein the connection edge is a connection edge in a graph representation of the wireless communication system, the graph representation comprises a plurality of first-type nodes, a plurality of second-type nodes, and the connection edges for connecting the first-type nodes to the second-type nodes, the plurality of first-type nodes represent the plurality of transmit antennas, the plurality of second-type nodes represent the plurality of receive antennas, and each connection edge represents a channel between one transmit antenna and one receive antenna;
a first determining module, configured to determine a status of each second-type node based on the feature of the connection edge connected to each second-type node; and
a second determining module, configured to determine a precoding matrix based on output features of the plurality of connection edges and statuses of the plurality of second-type nodes, wherein the precoding matrix is used to precode a signal to be sent by the transmit end device.

13. The apparatus according to claim 12, wherein the feature update module is specifically configured to:

perform an aggregation operation on previous-layer features of first adjacent edges corresponding to each connection edge, to obtain a first aggregation result, wherein the first adjacent edge is a connection edge that shares the first-type node with each connection edge;
perform an aggregation operation on previous-layer features of second adjacent edges corresponding to each connection edge, to obtain a second aggregation result, wherein the second adjacent edge is a connection edge that shares the second-type node with each connection edge;
perform a combination operation on the first aggregation result, the second aggregation result, and a previous-layer feature of each connection edge, to obtain a first combination result; and
update the feature of each connection edge based on the first combination result.

14. The apparatus according to claim 13, wherein the first aggregation result is further related to a first aggregation parameter, the second aggregation result is further related to a second aggregation parameter, and the first combination result is further related to a first combination parameter, wherein
the first aggregation parameter, the second aggregation parameter, and the first combination parameter are parameters obtained through training of the graph neural network.

15. The apparatus according to any one of claims 12 to 14, wherein the graph neural network comprises a multi-layer perceptron subnetwork; and
the first determining module is specifically configured to:

   process the output feature of the connection edge connected to each second-type node, to obtain a processing result; and
   use the processing result as an input of the multi-layer perceptron subnetwork, and output the status of each second-type node.

16. The apparatus according to claim 15, wherein the processing result is further related to a processing parameter, and the processing parameter is a parameter obtained through training of the graph neural network.

17. The apparatus according to claim 12, wherein an input of the graph neural network further comprises an initial feature of each second-type node; and
the feature update module is specifically configured to:

   perform an aggregation operation on previous-layer features of third adjacent edges corresponding to each connection edge, to obtain a third aggregation result, wherein the third adjacent edge is a connection edge that shares the first-type node with each connection edge;
   perform an aggregation operation on previous-layer features of fourth adjacent edges corresponding to each connection edge, to obtain a fourth aggregation result, wherein the fourth adjacent edge is a connection edge that shares the second-type node with each connection edge;
   perform a combination operation on the third aggregation result, the fourth aggregation result, and a previous-layer feature of each connection edge, to obtain a second combination result; and
   update the feature of each connection edge based on the second combination result and a previous-layer feature of the related second-type node, wherein the related second-type node is the second-type node connected to each connection edge.

18. The apparatus according to claim 17, wherein the first determining module is specifically configured to:

   update the feature of each second-type node based on the previous-layer feature of the connection edge connected to each second-type node and the previous-layer feature of each second-type node; and
   determine the status of each second-type node based on a last-layer feature of each second-type node.

19. The apparatus according to claim 18, wherein the third aggregation result is further related to a third aggregation parameter, the fourth aggregation result is further related to a fourth aggregation parameter, the second combination result is further related to a second combination parameter, feature update of each connection edge is further related to a first update parameter, and feature update of the second-type node is further related to a second update parameter, wherein
the third aggregation parameter, the fourth aggregation parameter, the second combination parameter, the first update parameter, and the second update parameter are parameters obtained through training of the graph neural network.

20. The apparatus according to any one of claims 12 to 19, wherein the status of the second-type node comprises a first status or a second status, the first status indicates that the second-type node is a target second-type node, and the second status indicates that the second-type node is a non-target second-type node; and
the second determining module is specifically configured to:

   determine an output feature of a target connection edge as a target precoding vector, wherein the target connection edge is a connection edge connected to the target second-type node; and
   determine the precoding matrix based on the target precoding vector.

21. The apparatus according to any one of claims 12 to 20, further comprising:

a second obtaining module, configured to obtain a signal-to-noise ratio and a quantity of antennas of the wireless communication system, wherein the quantity of antennas is determined based on a quantity of the plurality of transmit antennas and a quantity of the plurality of receive antennas; and

a loading module, configured to load corresponding parameters of the graph neural network based on the signal-to-noise ratio and the quantity of antennas.

22. The apparatus according to any one of claims 12 to 21, wherein the transmit end device comprises a base station, and the receive end device comprises a user terminal.

23. A communication apparatus, comprising a processor, wherein the processor is configured to execute a computer program or instructions in a memory, to implement the method according to any one of claims 1 to 11.

24. A communication apparatus, comprising a processor and a memory, wherein the memory is configured to store a computer program or instructions, and the processor is configured to execute the computer program or instructions stored in the memory, to implement the method according to any one of claims 1 to 11.

25. A computer-readable storage medium, storing a computer program, wherein when the computer program is executed on a computer, the computer is enabled to perform the method according to any one of claims 1 to 11.

26. A computer program or a computer program product, wherein the computer program or the computer program product comprises a computer program or instructions, and when the computer program or instructions are executed, the method according to any one of claims 1 to 11 is implemented.

FIG. 1

FIG. 2

FIG. 3

Base station

Terminal

Terminal

FIG. 4

Television

Mobile
phone

FIG. 5

FIG. 6

```
┌─────────────────────────┐ 701
│   Obtain GNN structure  │
│       information        │
└─────────────────────────┘
            │
            ▼
┌─────────────────────────┐ 702
│ Obtain an SNR and a quantity│
│      of antennas         │
└─────────────────────────┘
            │
            ▼
┌─────────────────────────┐ 703
│  Load corresponding GNN │
│       parameters         │
└─────────────────────────┘
            │
            ▼
┌─────────────────────────┐ 704
│ Obtain channel information│
└─────────────────────────┘
            │
            ▼
┌─────────────────────────┐ 705
│  Obtain precoding and user│
│  selection schemes through│
│      GNN inference       │
└─────────────────────────┘
```

FIG. 7

Obtain a plurality of pieces of channel information between a plurality of transmit antennas and a plurality of receive antennas — 801

Input the plurality of pieces of channel information into a graph neural network, where each piece of channel information serves as an edge feature of a connection edge corresponding to the channel information, and perform feature update on the edge feature of each connection edge by using a plurality of network layers in the GNN, to obtain an output feature of each connection edge — 802

Determine a status of each second-type node based on the output feature of the connection edge connected to each second-type node — 803

Determine a precoding matrix based on output features of a plurality of connection edges and statuses of a plurality of second-type nodes — 804

FIG. 8

Determine a precoding matrix — 901

Perform precoding processing on a to-be-sent signal based on the precoding matrix — 902

Send a precoding processed signal to a user terminal — 903

FIG. 9

```
┌─────────────────────────────────────┐
│                                     │  1001
│      Determine a precoding matrix   │
│                                     │
└─────────────────────────────────────┘
                  │
                  ▼
┌─────────────────────────────────────┐
│   Send the precoding matrix to a    │  1002
│        plurality of                 │
│          base stations              │
└─────────────────────────────────────┘
                  │
                  ▼
┌─────────────────────────────────────┐
│  Each base station in the plurality │  1003
│  of base stations performs          │
│  precoding processing on a          │
│  to-be-sent signal based on the     │
│  received precoding matrix          │
└─────────────────────────────────────┘
                  │
                  ▼
┌─────────────────────────────────────┐
│  Each base station sends a          │  1004
│  precoding processed signal to a    │
│  user terminal                      │
└─────────────────────────────────────┘
```

FIG. 10

Precoding apparatus 1100

First obtaining
module 1101

Feature update
module 1102

First determining
module 1103

Second determining
module 1104

Second obtaining
module 1105

Loading module 1106

FIG. 11

Precoding apparatus 1200

Transceiver
module 1201

Processing
module 1202

FIG. 12

Communication apparatus 1300

Processor 1301 — Memory 1302

Interface 1303

FIG. 13

## INTERNATIONAL SEARCH REPORT

| | International application No. |
|---|---|
| | **PCT/CN2023/099485** |

**A.    CLASSIFICATION OF SUBJECT MATTER**

H04B7/0456(2017.01)i

According to International Patent Classification (IPC) or to both national classification and IPC

**B.    FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT, CNKI, VCN, DWPI, ENTXT, IEEE: 多输入多输出, 多收多发, 图神经网络, 预编码矩阵, 信道状态信息, 天线, 接收天线, 状态, 目标用户, 确定, 选择, MIMO, GNN, precoding matrix, CSI, antenna, receiving antenna, state, target user, select

**C.    DOCUMENTS CONSIDERED TO BE RELEVANT**

| Category* | Citation of document, with indication, where appropriate, of the relevant passages | Relevant to claim No. |
|---|---|---|
| A | WO 2023088138 A1 (HUAWEI TECHNOLOGIES CO., LTD.) 25 May 2023 (2023-05-25) description, page 11 paragraphs 3-8, page 14 paragraph 9-page 21 paragraph 1, and figures 6-11 | 1-26 |
| A | CN 115865150 A (HUAWEI TECHNOLOGIES CO., LTD.) 28 March 2023 (2023-03-28) entire document | 1-26 |
| A | US 2023006718 A1 (QUALCOMM INC.) 05 January 2023 (2023-01-05) entire document | 1-26 |
| A | WO 2023018607 A1 (THE BOARD OF TRUSTEES OF THE UNIVERSITY OF ILLINOIS) 16 February 2023 (2023-02-16) entire document | 1-26 |
| A | WO 2023068398 A1 (LG ELECTRONICS INC.) 27 April 2023 (2023-04-27) entire document | 1-26 |
| A | ZHAO, Baichuan et al. "Learning Precoding Policy: CNN or GNN?" *2022 IEEE Wireless Communications and Networking Conference (WCNC)*, 13 April 2022 (2022-04-13), pages 1027-1032 | 1-26 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 December 2023** | **21 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/099485**

| Patent document cited in search report | | | Publication date (day/month/year) | Patent family member(s) | | | Publication date (day/month/year) |
|---|---|---|---|---|---|---|---|
| WO | 2023088138 | A1 | 25 May 2023 | CN | 116155330 | A | 23 May 2023 |
| CN | 115865150 | A | 28 March 2023 | None | | | |
| US | 2023006718 | A1 | 05 January 2023 | WO | 2023278949 | A1 | 05 January 2023 |
| WO | 2023018607 | A1 | 16 February 2023 | None | | | |
| WO | 2023068398 | A1 | 27 April 2023 | None | | | |

Form PCT/ISA/210 (patent family annex) (July 2022)